# EUROPEAN PATENT APPLICATION

(11) **EP 4 847 346 A1**
(43) Date of publication of application: **02.12.2026**
(21) Application number: 24920199.7
(22) Date of filing: 26.01.2024
(51) Int. Cl.: B62D 6/00, B62D 5/04

(54) **STEERING CONTROL DEVICE**

(71) Applicant: JTEKT CORPORATION, Kariya-shi, Aichi 448-8652 (JP)
(72) Inventor: KODERA Takashi, Kariya-shi, Aichi 448-8652 (JP)
(74) Representative: Winter, Brandl - Partnerschaft mbB
(86) International application number: PCT/JP2024/002417
(87) International publication number: WO 2025/158649

(57) **Abstract**

A steering control device (1) controls a steering system (2) including a motor (31, 12) that generates a torque to be applied to an operation element (5) of a vehicle, and controls the motor based on a torque command value calculated according to an operation state of the operation element. The steering control device includes: a disturbance estimator (65) that calculates, using a model that simulates the steering system, a disturbance torque that is a torque other than the torque generated by the motor (31) and affects a steered wheel (6) of the vehicle; a first processing unit (62B, 62D, 82) that generates an adjustment amount (F2, F5) for adjusting the torque command value based on the disturbance torque calculated by the disturbance estimator; and a second processing unit (62E, 62F, 71, 83) that reflects the adjustment amount generated by the first processing unit in a state variable that is a basis for calculation of the torque command value.

## Description

### TECHNICAL FIELD

The present disclosure relates to a steering control device.

### BACKGROUND ART

Hitherto, there is known a steer-by-wire steering system in which a steering wheel and steered wheels are mechanically separated such that power cannot be transmitted mechanically. This steering system includes a reaction motor, a steering motor, and a control device. The reaction motor generates a steering reaction force to be applied to a steering shaft. The steering motor generates a steering force for steering the steered wheels. When the vehicle is traveling, the control device generates the steering reaction force through the control on the reaction motor and steers the steered wheels through the control on the steering motor.

For example, a control device of Patent Document 1 calculates an angular axial force and a current axial force. The angular axial force and the current axial force are axial forces acting on a steered shaft that steers the steered wheels. The angular axial force is an axial force corresponding to a target rotation angle of a pinion shaft that rotates in conjunction with the steered wheels, and is an axial force that does not reflect a road surface condition. The current axial force is an axial force corresponding to a current value of the steering motor, and is an axial force that reflects the road surface condition.

The control device calculates a final axial force by multiplying the angular axial force and the current axial force by distribution ratios individually set depending on a vehicle speed etc. and then adding them together. The control device controls the reaction motor using the final axial force. Since the road surface axial force reflects the road surface condition, the steering reaction force generated by the reaction motor also reflects the road surface condition. Therefore, the driver can perceive the road surface condition through a tactile feedback provided via the steering wheel.

### Related Art Documents

### Patent Documents

Patent Document 1: Japanese Unexamined Patent Application Publication No. 2022-155295 (JP 2022-155295 A)

### SUMMARY OF THE INVENTION

### Problem to be Solved by the Invention

Steering control devices are required to provide drivers of vehicles with a more appropriate steering feel via operation elements such as steering wheels.

### Means for Solving the Problem

A steering control device according to one aspect of the present disclosure controls a steering system including a motor that generates a torque to be applied to an operation element of a vehicle, and is configured to control the motor based on a torque command value calculated according to an operation state of the operation element. The steering control device includes: a disturbance estimator configured to calculate, using a model that simulates the steering system, a disturbance torque that is a torque other than the torque generated by the motor and affects a steered wheel of the vehicle; a first processing unit configured to generate an adjustment amount for adjusting the torque command value based on the disturbance torque calculated by the disturbance estimator; and a second processing unit configured to reflect the adjustment amount generated by the first processing unit in a state variable that is a basis for calculation of the torque command value.

### BRIEF DESCRIPTION OF THE DRAWINGS

[FIG. 1] FIG. 1 is a configuration diagram of a steering system including a steering control device according to a first embodiment.
[FIG. 2] FIG. 2 is a block diagram of the steering control device in FIG. 1.
[FIG. 3] FIG. 3 is a block diagram of an axial torque calculation unit in FIG. 2.
[FIG. 4] FIG. 4 is a block diagram showing a main part of a steering control device according to a second embodiment.
[FIG. 5] FIG. 5 is a block diagram showing a main part of a steering control device according to a third embodiment.
[FIG. 6] FIG. 6 is a block diagram showing a main part of a steering control device according to a fourth embodiment.
[FIG. 7] FIG. 7 is a block diagram showing a main part of a steering control device according to a fifth embodiment.
[FIG. 8] FIG. 8 is a block diagram showing a main part of a steering control device according to a sixth embodiment.
[FIG. 9] FIG. 9 is a block diagram showing a main part of a steering control device according to a seventh embodiment.
[FIG. 10] FIG. 10 is a block diagram showing a main part of a steering control device according to an eighth embodiment.
[FIG. 11] FIG. 11 is a configuration diagram of a steering system including a steering control device according to a ninth embodiment.
[FIG. 12] FIG. 12 is a block diagram of the steering control device according to the ninth embodiment.
[FIG. 13] FIG. 13 is a block diagram showing a main part of a steering control device according to a tenth embodiment.
[FIG. 14] FIG. 14 is a block diagram showing a main part of a steering control device according to an eleventh embodiment.
[FIG. 15] FIG. 15 is a block diagram showing a main part of a steering control device according to a twelfth embodiment.

### MODES FOR CARRYING OUT THE INVENTION

### <First Embodiment>

A steering control device according to a first embodiment will be described.

### <Configuration of Steering System 2>

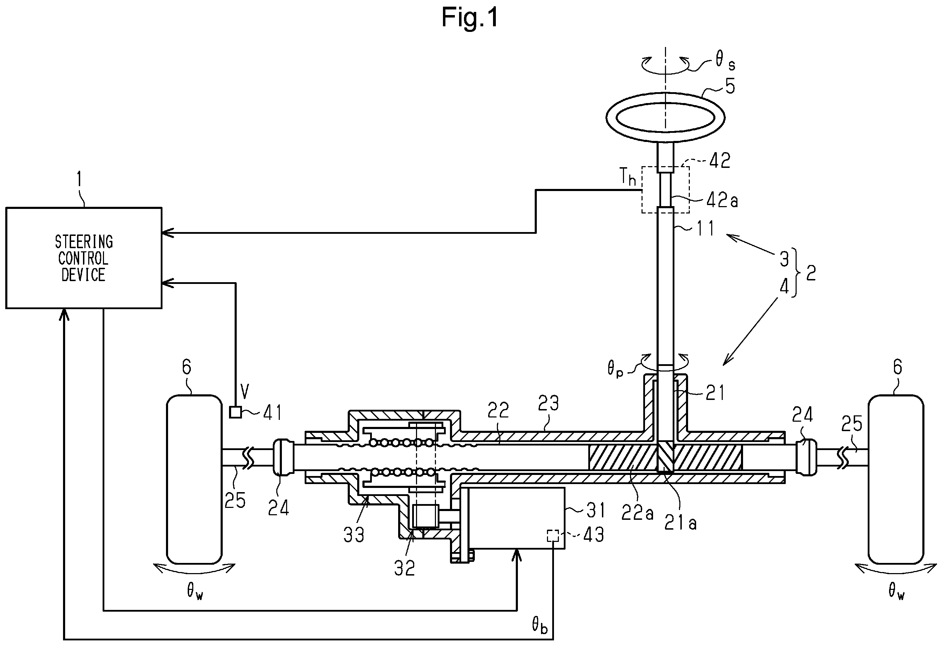

As shown in FIG. 1, the controlled object of a steering control device 1 is a steering system 2 of a vehicle. The steering system 2 is, for example, an electric power steering system, and includes a steering mechanism 3 and a steering operation mechanism 4. The steering mechanism 3 is a mechanism part that is steered by a driver via a steering wheel 5. The steering operation mechanism 4 is a mechanism part that steers steered wheels 6 of the vehicle according to steering of the steering wheel 5. The steering wheel 5 is an operation element to be operated by the driver when changing the travel direction of the vehicle.

The steering mechanism 3 includes a steering shaft 11. The steering wheel 5 is connected to a first end of the steering shaft 11 so as to be rotatable together with the steering shaft 11. The steering operation mechanism 4 includes a pinion shaft 21, a steered shaft 22, and a housing 23. The housing 23 rotatably supports the pinion shaft 21. The pinion shaft 21 is provided so as to intersect the steered shaft 22. A first end of the pinion shaft 21 is connected to a second end of the steering shaft 11 so as to be rotatable together with the steering shaft 11. A second end of the pinion shaft 21 is provided with pinion teeth 21a.

The housing 23 houses the steered shaft 22 such that the steered shaft 22 can reciprocate. The steered shaft 22 includes rack teeth 22a. The rack teeth 22a mesh with the pinion teeth 21a. Tie rods 25 are connected to both ends of the steered shaft 22 via rack ends 24 that are ball joints. Distal ends of the tie rods 25 are connected to knuckles (not shown) to which the steered wheels 6 are attached. That is, the steering wheel 5 and the steered wheels 6 are connected such that power can be transmitted.

The steering operation mechanism 4 includes a steering motor 31, a transmission mechanism 32, and a conversion mechanism 33. The steering motor 31 functions as an assist motor that generates an assist force to be applied to the steered shaft 22. The assist force is a force for assisting in steering of the steering wheel 5. The steering motor 31 is, for example, a three-phase brushless motor. The transmission mechanism 32 is, for example, a belt transmission mechanism. The transmission mechanism 32 transmits rotation of the steering motor 31 to the conversion mechanism 33. The conversion mechanism 33 is, for example, a ball screw mechanism. The conversion mechanism 33 converts the rotation transmitted via the transmission mechanism 32 to axial motion of the steered shaft 22.

A steered angle θ_{w} of the steered wheels 6 is changed as the steered shaft 22 moves in the axial direction. The pinion teeth 21a of the pinion shaft 21 mesh with the rack teeth 22a of the steered shaft 22. Therefore, the pinion shaft 21 rotates in conjunction with the movement of the steered shaft 22. The pinion shaft 21 is a rotator that rotates in conjunction with a steering operation of the steered wheels 6.

The steering control device 1 performs assist control. The assist control is control for supplying electric power to the steering motor 31 such that the steering motor 31 generates an assist torque corresponding to a steering torque Tₕ. The steering control device 1 includes a processing circuit including any one of the following three configurations A1, A2, A3.

A1. One or more processors that operate in accordance with a computer program that is software. The processor includes a CPU (Central Processing Unit) and a memory.
A2. One or more dedicated hardware circuits, such as an application-specific integrated circuit (ASIC), that perform at least part of various processes. The ASIC includes a CPU and a memory.

A3. A hardware circuit composed of a combination of the configurations A1, A2.
The memory is a computer-readable medium and stores programs that describe processes or instructions for the computer. In the present embodiment, the computer is a CPU. The memory includes a RAM (Random Access Memory) and a ROM (Read Only Memory). The CPU executes various types of control by executing the programs stored in the memory at a determined calculation cycle.

The steering control device 1 receives detection results from on-board sensors. The sensors include a vehicle speed sensor 41, a torque sensor 42, and a rotation angle sensor 43. The vehicle speed sensor 41 detects a vehicle speed V. The vehicle speed V is a state variable that reflects a travel state of the vehicle. The torque sensor 42 is provided on the steering shaft 11. The torque sensor 42 detects the steering torque Tₕ applied to the steering shaft 11. The steering torque Tₕ is calculated based on a torsion amount of a torsion bar 42a provided on the steering shaft 11. The steering torque Tₕ is a state variable that reflects a steering state of the steering wheel 5. The rotation angle sensor 43 is provided on the steering motor 31. The rotation angle sensor 43 detects a rotation angle θ_{b} of the steering motor 31.

For example, the steering torque Tₕ and the rotation angle θ_{b} of the steering motor 31 are positive values when the steering wheel 5 is steered to the right, and negative values when the steering wheel 5 is steered to the left.

The steering control device 1 controls the operation of the steering motor 31 using the detection results from the vehicle speed sensor 41, the torque sensor 42, and the rotation angle sensor 43. The steering control device 1 controls the power supply to the steering motor 31 such that the steering motor 31 generates an assist torque corresponding to the steering torque Tₕ.

### <Configuration of Steering Control Device 1>

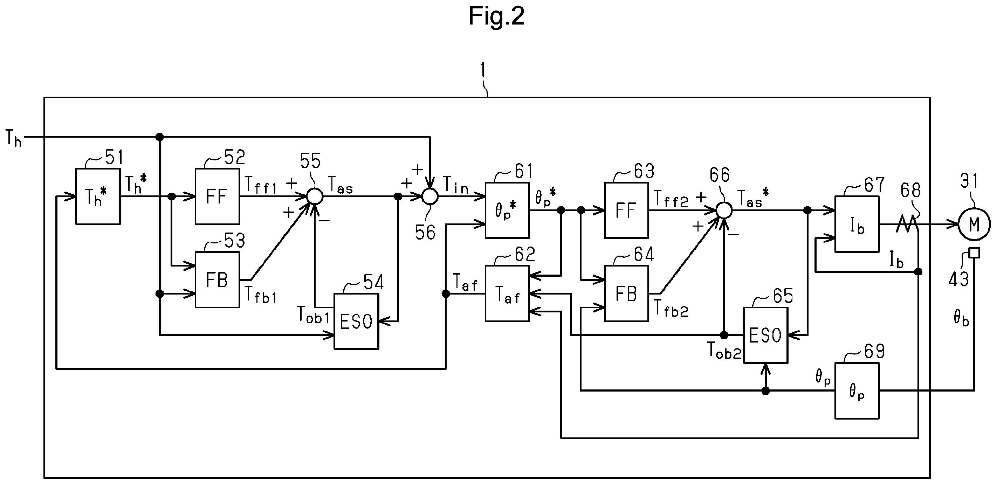

Next, the configuration of the steering control device 1 will be described. As shown in FIG. 2, the steering control device 1 includes a target steering torque calculation unit 51, a torque feedforward control unit 52, a torque feedback control unit 53, a first disturbance estimator 54, a first calculator 55, and a second calculator 56. The steering control device 1 further includes a target angle calculation unit 61, an axial torque calculation unit 62, an angle feedforward control unit 63, an angle feedback control unit 64, a second disturbance estimator 65, and a third calculator 66. The steering control device 1 further includes a current control unit 67, a current sensor 68, and an angle calculation unit 69.

The target steering torque calculation unit 51 receives an axial torque T_{af} calculated by the axial torque calculation unit 62. The target steering torque calculation unit 51 calculates a target steering torque Tₕ* based on the axial torque T_{af}. The axial torque T_{af} is obtained by converting an axial force acting on the steered shaft 22 into a torque relative to the steering shaft 11. As the absolute value of the axial torque T_{af} increases, the absolute value of the target steering torque Tₕ* increases.

The torque feedforward control unit 52 performs a process of compensating for a response delay caused by the inertia of the steering system 2 to improve the responsiveness of control. The torque feedforward control unit 52 receives the target steering torque Tₕ* calculated by the target steering torque calculation unit 51. The torque feedforward control unit 52 calculates a first feedforward control torque T_{ff1} by performing feedforward control based on the target steering torque Tₕ*. The torque feedforward control unit 52 calculates the first feedforward control torque T_{ff1} by, for example, taking a second derivative of the target steering torque Tₕ* and multiplying the value of the second derivative by the inertia of the steering system 2. The first feedforward control torque T_{ff1} is an inertia compensation value. The inertia is obtained from, for example, a physical model of the steering system 2.

The torque feedback control unit 53 receives the steering torque Tₕ detected by the torque sensor 42 and the target steering torque Tₕ* calculated by the target steering torque calculation unit 51. The torque feedback control unit 53 calculates a first feedback control torque T_{fb1} by performing feedback control of the steering torque Tₕ such that the steering torque Tₕ detected by the torque sensor 42 follows the target steering torque Tₕ*.

The first disturbance estimator 54 is configured to estimate and compensate for a disturbance torque. The disturbance torque is a nonlinear torque that occurs as a disturbance in the actual plant, namely the steering system 2, and is a torque, other than the torque generated by the steering motor 31, that affects the steering torque Tₕ. The first disturbance estimator 54 is, for example, an extended state observer. The first disturbance estimator 54 estimates a first disturbance torque T_{ob1} based on a nominal plant. The nominal plant is a model that simulates the actual plant, i.e., the steering system 2, that is the actual controlled object. The first disturbance estimator 54 receives the steering torque Tₕ detected by the torque sensor 42 and an assist torque Tₐₛ calculated by the first calculator 55. The first disturbance estimator 54 calculates the first disturbance torque T_{ob1} based on the steering torque Tₕ and the assist torque Tₐₛ.

The first calculator 55 receives the first feedforward control torque T_{ff1} calculated by the torque feedforward control unit 52, the first feedback control torque T_{fb1} calculated by the torque feedback control unit 53, and the first disturbance torque T_{ob1} calculated by the first disturbance estimator 54. The first calculator 55 calculates the assist torque Tₐₛ by adding the first feedforward control torque T_{ff1} and the first feedback control torque T_{fb1} and subtracting the first disturbance torque T_{ob1} from the value obtained by the addition.

The second calculator 56 receives the steering torque Tₕ detected by the torque sensor 42 and the assist torque Tₐₛ calculated by the first calculator 55. The second calculator 56 calculates an input torque Tᵢₙ by adding the steering torque Tₕ and the assist torque Tₐₛ. The input torque Tᵢₙ is a torque applied to the steering shaft 11.

The target angle calculation unit 61 receives the input torque Tᵢₙ calculated by the second calculator 56 and the axial torque T_{af} calculated by the axial torque calculation unit 62. The target angle calculation unit 61 calculates a target pinion angle θₚ* based on the input torque Tᵢₙ and the axial torque T_{af}. The target pinion angle θₚ* is a target value of a pinion angle θₚ that is a rotation angle of the pinion shaft 21.

The target angle calculation unit 61 determines the final input torque Tᵢₙ for the steering wheel 5 by subtracting the axial torque T_{af} calculated by the axial torque calculation unit 62 from the input torque Tᵢₙ calculated by the second calculator 56. The target angle calculation unit 61 calculates the target pinion angle θₚ* using, for example, a model expressed by the following equation (1). The model is one that models an ideal pinion angle θₚ when a torque corresponding to the input torque Tᵢₙ is applied to the steering shaft 11.
${T}_{in} = J ⋅ {{θ}_{p}}^{∗} " + C ⋅ {{θ}_{p}}^{∗} ′ + K ⋅ {{θ}_{p}}^{∗}$ (1) "J" is an inertia coefficient that models a moment of inertia of the steering system 2. "C" is a viscous coefficient that models friction etc. of the steering system 2. "K" is a spring coefficient that models, as a spring, specifications such as the suspension and wheel alignment of a vehicle on which the steering system 2 is mounted. The inertia coefficient J, the viscous coefficient C, and the spring coefficient K take values corresponding to the vehicle speed V detected by the vehicle speed sensor 41. "θₚ*ʺʺ is a second time derivative of the target pinion angle θₚ*, and "θₚ*‴ is a first time derivative of the target pinion angle θₚ*. The symbol "·" in the equation (1) indicates multiplication.

The current sensor 68 is provided in a power supply path between the current control unit 67 and the steering motor 31. The current sensor 68 detects a current I_{b} supplied to the steering motor 31. The axial torque calculation unit 62 receives the target pinion angle θₚ* calculated by the target angle calculation unit 61, the current I_{b} of the steering motor 31 detected by the current sensor 68, and a second disturbance torque T_{ob2} calculated by the second disturbance estimator 65. The axial torque calculation unit 62 calculates an axial force acting on the steered shaft 22 based on the target pinion angle θₚ*, the current I_{b} of the steering motor 31, and the second disturbance torque T_{ob2}. The axial torque calculation unit 62 calculates the axial torque T_{af} by converting the calculated axial force into a torque relative to the steering shaft 11. The axial torque calculation unit 62 will be described in detail later.

The angle feedforward control unit 63 performs a process of compensating for a response delay caused by the inertia of the steering system 2 to improve the responsiveness of control. The angle feedforward control unit 63 receives the target pinion angle θₚ* calculated by the target angle calculation unit 61. The angle feedforward control unit 63 calculates a second feedforward control torque T_{ff2} by performing feedforward control based on the target pinion angle θₚ*. The angle feedforward control unit 63 calculates the second feedforward control torque T_{ff2} by, for example, taking a second derivative of the target pinion angle θₚ* and multiplying the value of the second derivative by the inertia of the steering system 2. The second feedforward control torque T_{ff2} is an inertia compensation value. The inertia is obtained from, for example, the physical model of the steering system 2.

The angle calculation unit 69 calculates the pinion angle θₚ based on the rotation angle θ_{b} of the steering motor 31 detected by the rotation angle sensor 43. The pinion angle θₚ is the rotation angle of the pinion shaft 21. The angle calculation unit 69 calculates the pinion angle θₚ by, for example, dividing the rotation angle θ_{b} by a reduction ratio from the pinion shaft 21 to the transmission mechanism 32.

The angle feedback control unit 64 receives the target pinion angle θₚ* calculated by the target angle calculation unit 61 and the pinion angle θₚ calculated by the angle calculation unit 69. The angle feedback control unit 64 calculates a second feedback control torque T_{fb2} by performing feedback control of the pinion angle θₚ such that the pinion angle θₚ calculated by the angle calculation unit 69 follows the target pinion angle θₚ*.

The second disturbance estimator 65 is configured to estimate and compensate for a disturbance torque. The disturbance torque is a nonlinear torque that occurs as a disturbance in the actual plant, namely the steering system 2, and is a torque, other than the torque generated by the steering motor 31, that affects the pinion angle θₚ and further the steered angle θ_{w}. The second disturbance estimator 65 is, for example, an extended state observer. The second disturbance estimator 65 estimates the second disturbance torque T_{ob2} based on a nominal plant. The nominal plant is a model that simulates the actual plant, i.e., the steering system 2, that is the actual controlled object. The second disturbance estimator 65 receives the pinion angle θₚ calculated by the angle calculation unit 69 and an assist torque command value Tₐₛ* calculated by the third calculator 66. The second disturbance estimator 65 calculates the second disturbance torque T_{ob2} based on the pinion angle θₚ and the assist torque command value Tₐₛ*.

The third calculator 66 receives the second feedforward control torque T_{ff2} calculated by the angle feedforward control unit 63, the second feedback control torque T_{fb2} calculated by the angle feedback control unit 64, and the second disturbance torque T_{ob2} calculated by the second disturbance estimator 65. The third calculator 66 calculates the assist torque command value Tₐₛ* by adding the second feedforward control torque T_{ff2} and the second feedback control torque T_{fb2} and subtracting the second disturbance torque T_{ob2} from the value obtained by the addition. The assist torque command value Tₐₛ* is a target value of a torque to be generated by the steering motor 31.

The current control unit 67 receives the assist torque command value Tₐₛ* calculated by the third calculator 66. The current control unit 67 supplies electric power corresponding to the assist torque command value Tₐₛ* to the steering motor 31. That is, the current control unit 67 calculates a current command value based on the assist torque command value Tₐₛ*. The current command value is a target value of a current to be supplied to the steering motor 31. The current control unit 67 detects the current I_{b} supplied to the steering motor 31 via the current sensor 68, and performs feedback control of the detected current I_{b}. The current control unit 67 calculates a deviation between the current command value and the value of the current I_{b} detected by the current sensor 68, and controls the power supply to the steering motor 31 so as to eliminate the calculated deviation. The steering motor 31 thus generates a torque corresponding to the assist torque command value Tₐₛ*.

### <Configuration of Axial Torque Calculation Unit 62>

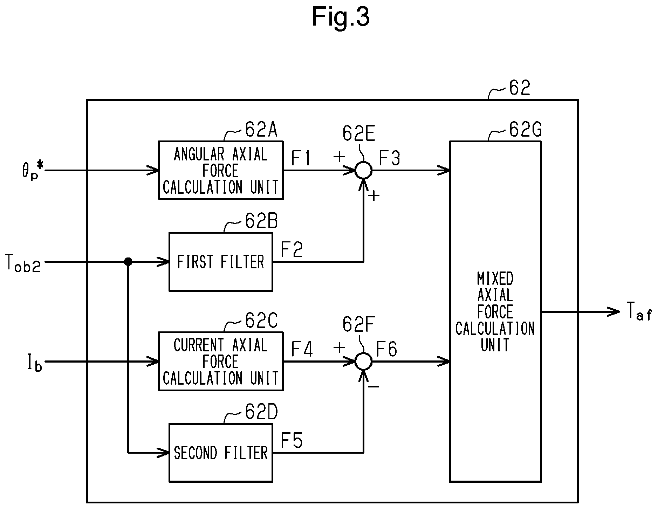

Next, the configuration of the axial torque calculation unit 62 will be described in detail. As shown in FIG. 3, the axial torque calculation unit 62 includes an angular axial force calculation unit 62A, a first filter 62B, a current axial force calculation unit 62C, a second filter 62D, a fourth calculator 62E, a fifth calculator 62F, and a mixed axial force calculation unit 62G.

The angular axial force calculation unit 62A receives the target pinion angle θₚ* calculated by the target angle calculation unit 61. The angular axial force calculation unit 62A calculates an angular axial force F1 based on the target pinion angle θₚ*. The angular axial force F1 is, for example, an ideal axial force corresponding to the target pinion angle θₚ*, and is an axial force that does not reflect a road surface condition or a force acting on the steered shaft 22 via the steered wheels 6. The absolute value of the angular axial force F1 may increase as the absolute value of the target pinion angle θₚ* increases. For example, the absolute value of the angular axial force F1 increases linearly relative to the increase in absolute value of the target pinion angle θₚ*. The angular axial force F1 has the same sign as the target pinion angle θₚ*. However, the angular axial force calculation unit 62A calculates the angular axial force F1 as a value converted into a torque for the steering shaft 11.

The angular axial force calculation unit 62A may calculate the angular axial force F1 in consideration of the vehicle speed V. In this case, the absolute value of the angular axial force F1 may increase as the absolute value of the target pinion angle θₚ* increases, and as the vehicle speed V decreases. Alternatively, the angular axial force calculation unit 62A may calculate the angular axial force F1 by receiving the pinion angle θₚ or a steering angle θₛ instead of the target pinion angle θₚ* and using the received pinion angle θₚ or the received steering angle θₛ.

The first filter 62B receives the second disturbance torque T_{ob2} calculated by the second disturbance estimator 65. The disturbance torque T_{ob2} includes, for example, various vibration frequency components corresponding to the road surface condition. The first filter 62B includes, for example, a bandpass filter. The first filter 62B performs first signal processing on the second disturbance torque T_{ob2}. That is, the first filter 62B extracts a frequency component that is important for the steering feel from the second disturbance torque T_{ob2}. The frequency component that is important for the steering feel is, for example, a frequency component that is necessary for the vehicle driver to perceive a road surface condition or a grip state of the steered wheels 6 on a road surface in vibrations generated between the road surface and the steered wheels 6. The frequency component extracted by the first filter 62B is a first adjustment amount F2 for adjusting the angular axial force F1.

The fourth calculator 62E receives the angular axial force F1 calculated by the angular axial force calculation unit 62A and the first adjustment amount F2 that is the frequency component extracted by the first filter 62B. The fourth calculator 62E calculates a final angular axial force F3 by adding the first adjustment amount F2 to the angular axial force F1. The final angular axial force F3 is a final angular axial force to be used in the calculation of the axial torque T_{af}, and is an angular axial force that reflects the road surface condition to be perceived by the vehicle driver.

The current axial force calculation unit 62C receives the current I_{b} of the steering motor 31 detected by the current sensor 68. The current axial force calculation unit 62C calculates a current axial force F4 based on the value of the current I_{b} of the steering motor 31. The current axial force F4 is an axial force corresponding to the value of the current I_{b} of the steering motor 31, and is an axial force that reflects the road surface condition or the force acting on the steered shaft 22 via the steered wheels 6. The value of the current I_{b} of the steering motor 31 changes depending on a difference between the target pinion angle θₚ* and the actual pinion angle θₚ due to a disturbance corresponding to the road surface condition such as a road surface friction resistance acting on the steered wheels 6. That is, the value of the current I_{b} of the steering motor 31 reflects the actual road surface condition acting on the steered wheels 6. Therefore, the axial force that reflects the effect of the road surface condition can be calculated based on the value of the current I_{b} of the steering motor 31. The current axial force calculation unit 62C calculates the current axial force F4, for example, by multiplying the value of the current I_{b} of the steering motor 31 by a gain that is a coefficient corresponding to the vehicle speed V. However, the current axial force F4 includes a viscous component and a frictional component of the steering system 2. The friction and viscosity of the steering system 2 are pieces of information that need not be communicated to the vehicle driver. However, the current axial force calculation unit 62C calculates the current axial force F4 as a value converted into a torque for the steering shaft 11.

The second filter 62D receives the second disturbance torque T_{ob2} calculated by the second disturbance estimator 65. The disturbance torque T_{ob2} includes not only the frequency components of various vibrations corresponding to the road surface condition, but also frequency components related to the friction and viscosity of the steering system 2. The second filter 62D includes, for example, a low-pass filter. The second filter 62D performs second signal processing on the second disturbance torque T_{ob2}. That is, the second filter 62D extracts a frequency component that is unnecessary for the steering feel from the second disturbance torque T_{ob2}. The frequency component that is unnecessary for the steering feel is, for example, the frequency components related to the friction and viscosity of the steering system 2. The frequency component extracted by the second filter 62D is a second adjustment amount F5 for adjusting the current axial force F4.

The fifth calculator 62F receives the current axial force F4 calculated by the current axial force calculation unit 62C and the second adjustment amount F5 that is the unnecessary frequency component extracted by the second filter 62D. The fifth calculator 62F calculates a final current axial force F6 by subtracting the second adjustment amount F5 from the current axial force F4. The final current axial force F6 is a final current axial force to be used in the calculation of the axial torque T_{af}, and is a current axial force obtained by removing the viscous component and the frictional component of the steering system 2.

The mixed axial force calculation unit 62G receives the final angular axial force F3 calculated by the fourth calculator 62E and the final current axial force F6 calculated by the fifth calculator 62F. The mixed axial force calculation unit 62G calculates, as the axial torque T_{af}, a mixed axial force by mixing the final angular axial force F3 and the final current axial force F6 at predetermined ratios. The mixed axial force calculation unit 62G individually sets distribution ratios for the final angular axial force F3 and the final current axial force F6 depending on various state variables that reflect the vehicle behavior, the road surface condition, or the steering state. The state variables include, for example, the steering angle θₛ or the vehicle speed V. The mixed axial force calculation unit 62G calculates the axial torque T_{af} that is the mixed axial force by adding values obtained by multiplying the final angular axial force F3 and the final current axial force F6 by the distribution ratios that are set individually. The distribution ratio is set within a range of 0% or more and 100% or less. The sum of the distribution ratio for the final angular axial force F3 and the distribution ratio for the final current axial force F6 is 100%.

### <Functions and Effects of First Embodiment>

The first embodiment achieves the following functions and effects.
(1-1) The angular axial force F1 calculated based on the target pinion angle θₚ* is a robust axial force that is less susceptible to disturbances, i.e., an axial force that does not include road information to be communicated to the vehicle driver. The road information is information indicating the condition of a road surface. The second disturbance torque T_{ob2} calculated by the second disturbance estimator 65 includes the road information to be communicated to the vehicle driver. The road information includes, for example, information that is necessary for the vehicle driver to perceive the road surface condition or the grip state of the steered wheels 6 on the road surface.

Therefore, the road information to be communicated to the vehicle driver is extracted from the second disturbance torque T_{ob2}, and the extracted road information is provided to the angular axial force F1. Thus, only the road information to be communicated to the vehicle driver can be superimposed on the robust angular axial force F1. By using the final angular axial force F3 including the road information, the assist torque command value Tₐₛ* that reflects the road information to be communicated to the vehicle driver can be obtained. By applying an assist force corresponding to the assist torque command value Tₐₛ* to the steering wheel 5, the vehicle driver can be given an appropriate tactile feedback according to the road surface condition. The vehicle driver can perceive the road surface condition as the tactile feedback via the steering wheel 5.

The extraction of the frequency component that is important for the steering feel from the second disturbance torque T_{ob2} is equivalent to extraction of the road information to be communicated to the vehicle driver from the second disturbance torque T_{ob2}. The addition of the first adjustment amount F2 to the angular axial force F1 means addition of the frequency component that is important for the steering feel and extracted from the second disturbance torque T_{ob2} to the angular axial force F1, and provision of the road information extracted from the second disturbance torque T_{ob2} to the angular axial force F1.

(1-2) The current axial force F4 calculated based on the value of the current I_{b} of the steering motor 31 includes the road information to be communicated to the vehicle driver and the unnecessary information that need not be communicated to the vehicle driver. The unnecessary information includes, for example, the viscous component and the frictional component of the steering system 2. The friction and viscosity of the steering system 2 are pieces of information that need not be communicated to the vehicle driver. The second disturbance torque T_{ob2} calculated by the second disturbance estimator 65 includes the viscous component and the frictional component of the steering system 2.

By extracting the viscous component and the frictional component of the steering system 2 from the second disturbance torque T_{ob2} and subtracting the extracted viscous component and the extracted frictional component from the current axial force F4, the unnecessary information can be removed from the current axial force F4. By using the final current axial force F6 obtained by removing the unnecessary information, the assist torque command value Tₐₛ* in which the viscous component and the frictional component of the steering system 2 are reduced is obtained. By applying an assist force corresponding to the assist torque command value Tₐₛ* to the steering wheel 5, it is possible to suppress the occurrence of a case where the viscous sensation and the frictional sensation of the steering system 2 are conveyed to the vehicle driver. Thus, the vehicle driver can be given a clear steering feel according to the road surface condition.

The extraction of the viscous component and the frictional component of the steering system 2 from the second disturbance torque T_{ob2} is equivalent to extraction of the frequency component that is unnecessary for the steering feel from the second disturbance torque T_{ob2}, and extraction of the unnecessary information that need not be communicated to the vehicle driver from the disturbance torque. The subtraction of the second adjustment amount F5 from the current axial force F4 is equivalent to subtraction of the viscous component and the frictional component of the steering system 2 from the current axial force F4, and removal of the unnecessary road information from the current axial force F4.

(1-3) The mixed axial force calculation unit 62G calculates the axial torque T_{af} that is the mixed axial force by adding values obtained by multiplying the final angular axial force F3 and the final current axial force F6 by the distribution ratios that are set individually. The final angular axial force F3 is an axial force obtained by adding the road information to be communicated to the vehicle driver to the angular axial force F1 that does not include the road information to be communicated to the vehicle driver. The final current axial force F6 is an axial force obtained by removing the unnecessary information that need not be communicated to the vehicle driver from the current axial force F4 including the unnecessary information that need not be communicated to the vehicle driver. Therefore, the axial torque T_{af} provided with only the road information to be communicated to the vehicle driver is obtained regardless of the ratio at which the final angular axial force F3 and the final current axial force F6 are mixed. The axial torque T_{af} does not include the unnecessary information that need not be communicated to the vehicle driver. By applying an assist force corresponding to the assist torque command value Tₐₛ* calculated using the axial torque T_{af} to the steering wheel 5, the vehicle driver can be given an appropriate steering feel according to the road surface condition.

When the angular axial force F1 and the current axial force F4 are used directly to control the steering motor 31, the following concerns arise. The angular axial force F1 is used to ensure robustness when calculating the target pinion angle θₚ*. On the other hand, the angular axial force F1 acts to cancel out the road information. Therefore, for example, when the distribution ratio of the angular axial force F1 is "100%" and the distribution ratio of the current axial force F4 is "0%," the actual steered angle θ_{w} is maintained to be the steered angle θ_{w} corresponding to the target pinion angle θₚ* even if a reverse input vibration occurs due to the road surface condition or the disturbance such as braking. That is, the transmission of the reverse input vibration to the steering wheel 5 is suppressed by assisting in steering of the steering wheel 5 in a direction in which the reverse input vibration is canceled out. Thus, the vehicle driver has difficulty in perceiving the road surface condition via the steering wheel 5.

The current axial force F4 is used to communicate the road information to the vehicle driver. However, the current axial force F4 includes the unnecessary information that need not be communicated to the vehicle driver, such as the frictional component and the viscous component of the steering system 2. Therefore, for example, when the distribution ratio of the angular axial force F1 is "0%" and the distribution ratio of the current axial force F4 is "100%," the viscous sensation and the frictional sensation may be conveyed to the vehicle driver as information via the steering wheel 5.

Therefore, when the axial torque T_{af} that is a mixed axial force obtained by directly mixing the angular axial force F1 and the current axial force F4 is used to control the steering motor 31, the following issues may occur. That is, when the distribution ratio of the angular axial force F1 is greater than the distribution ratio of the current axial force F4, there is a possibility that the road information is not effectively communicated to the vehicle driver. Conversely, when the distribution ratio of the current axial force F4 is greater than the distribution ratio of the angular axial force F1, there is a possibility that the unnecessary information is communicated to the vehicle driver. According to the present embodiment, such a tradeoff can be resolved.

(1-4) The axial torque calculation unit 62 adjusts the angular axial force F1 and the current axial force F4 using the second disturbance torque T_{ob2}. Therefore, complicated constant designing is unnecessary unlike the case where the steering control device 1 has individual compensation functions for the current axial force F4. The compensation functions include a friction compensation function and a viscosity compensation function. The steering control device 1 is advantageous in terms of CPU resources because the steering control device 1 does not have the individual compensation functions for the current axial force F4.

### <Second Embodiment>

Next, a second embodiment of the steering control device will be described. The present embodiment differs from the first embodiment in terms of the configuration of the axial torque calculation unit 62. Therefore, the same members and configurations as those in the first embodiment will be denoted by the same signs as those in the first embodiment, and detailed description thereof will be omitted.

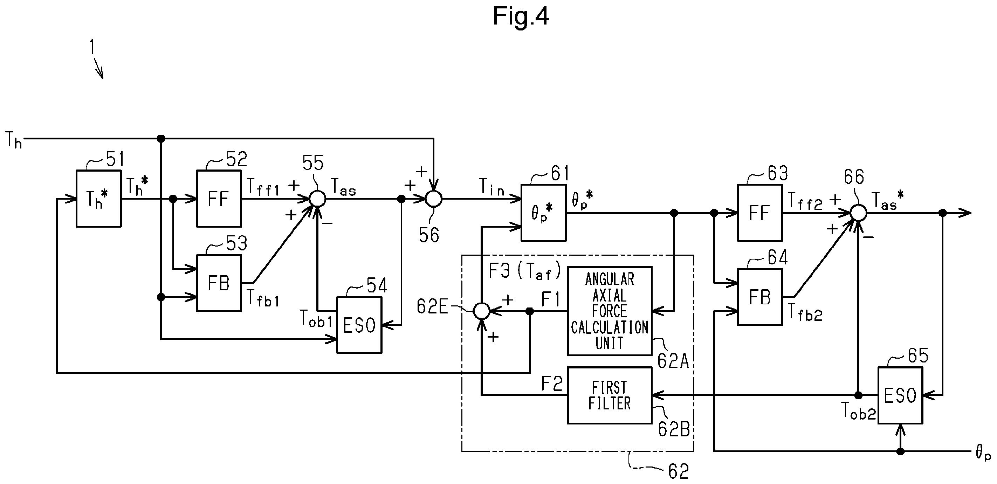

As shown in FIG. 4, the axial torque calculation unit 62 employs a configuration in which the current axial force calculation unit 62C, the second filter 62D, the fifth calculator 62F, and the mixed axial force calculation unit 62G are omitted. That is, the axial torque calculation unit 62 includes the angular axial force calculation unit 62A, the first filter 62B, and the fourth calculator 62E.

The angular axial force calculation unit 62A calculates the angular axial force F1 based on the target pinion angle θₚ*. The first filter 62B extracts the frequency component that is important for the steering feel from the second disturbance torque T_{ob2} calculated by the second disturbance estimator 65, and uses it as the first adjustment amount F2 for the angular axial force F1. The fourth calculator 62E calculates the final angular axial force F3 as the axial torque T_{af} by adding the first adjustment amount F2 to the angular axial force F1.

The target steering torque calculation unit 51 receives the angular axial force F1 calculated by the angular axial force calculation unit 62A, and calculates the target steering torque Tₕ* based on the received angular axial force F1. However, the target steering torque calculation unit 51 may calculate the target steering torque Tₕ* based on the final angular axial force F3 serving as the axial torque T_{af} calculated by the fourth calculator 62E.

According to the present embodiment, the same effect as the effect (1-1) of the first embodiment can be obtained.

### <Third Embodiment>

Next, a third embodiment of the steering control device will be described. The present embodiment differs from the first embodiment in terms of the configuration of the axial torque calculation unit 62. Therefore, the same members and configurations as those in the first embodiment will be denoted by the same signs as those in the first embodiment, and detailed description thereof will be omitted.

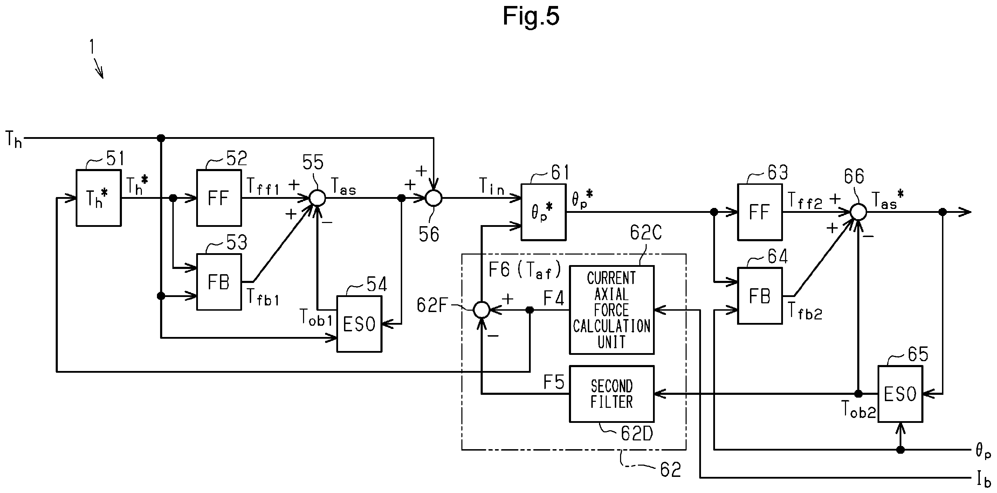

As shown in FIG. 5, the axial torque calculation unit 62 employs a configuration in which the angular axial force calculation unit 62A, the first filter 62B, the fourth calculator 62E, and the mixed axial force calculation unit 62G are omitted. That is, the axial torque calculation unit 62 includes the current axial force calculation unit 62C, the second filter 62D, and the fifth calculator 62F.

The current axial force calculation unit 62C calculates the current axial force F4 based on the value of the current I_{b} of the steering motor 31. The second filter 62D extracts the frequency component that is unnecessary for the steering feel from the second disturbance torque T_{ob2}, and uses it as the second adjustment amount F5 for the current axial force F4. The fifth calculator 62F calculates the final current axial force F6 as the axial torque T_{af} by subtracting the second adjustment amount F5 from the current axial force F4.

The target steering torque calculation unit 51 receives the current axial force F4 calculated by the current axial force calculation unit 62C, and calculates the target steering torque Tₕ* based on the received current axial force F4. However, the target steering torque calculation unit 51 may calculate the target steering torque Tₕ* based on the final current axial force F6 serving as the axial torque T_{af} calculated by the fifth calculator 62F.

According to the present embodiment, the same effect as the effect (1-2) of the first embodiment can be obtained.

### <Fourth Embodiment>

Next, a fourth embodiment of the steering control device will be described. The present embodiment differs from the first embodiment in terms of the configuration of the axial torque calculation unit 62 and the state variable corrected based on the second disturbance torque T_{ob2}. Therefore, the same members and configurations as those in the first embodiment will be denoted by the same signs as those in the first embodiment, and detailed description thereof will be omitted.

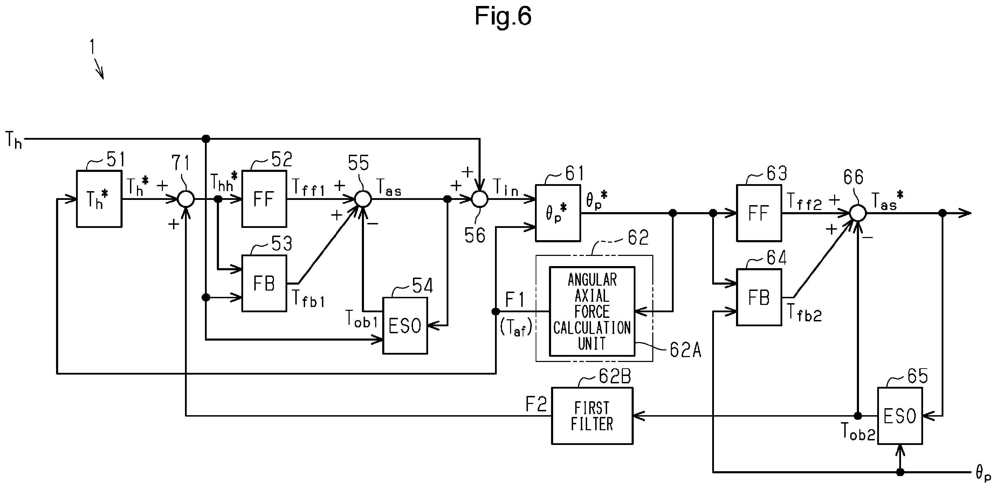

As shown in FIG. 6, the axial torque calculation unit 62 employs a configuration in which the first filter 62B, the current axial force calculation unit 62C, the second filter 62D, the fourth calculator 62E, the fifth calculator 62F, and the mixed axial force calculation unit 62G are omitted. That is, the axial torque calculation unit 62 includes the angular axial force calculation unit 62A. The first filter 62B is not the component of the axial torque calculation unit 62, but is present as a component of the steering control device 1.

The angular axial force calculation unit 62A calculates the angular axial force F1 as the axial torque T_{af} based on the target pinion angle θₚ*. The target steering torque calculation unit 51 receives the angular axial force F1 calculated by the angular axial force calculation unit 62A and serving as the axial torque T_{af}, and calculates the target steering torque Tₕ* based on the received angular axial force F1. The first filter 62B extracts the frequency component that is important for the steering feel from the second disturbance torque T_{ob2} calculated by the second disturbance estimator 65, and uses it as the first adjustment amount F2 for the target steering torque Tₕ*.

The steering control device 1 includes a sixth calculator 71. The sixth calculator 71 receives the target steering torque Tₕ* calculated by the target steering torque calculation unit 51 and the first adjustment amount F2 that is the frequency component extracted by the first filter 62B. The sixth calculator 71 calculates a final target steering torque Tₕₕ* by adding the first adjustment amount F2 to the target steering torque Tₕ*. The final target steering torque Tₕₕ* is a final target steering torque to be used in the control of the steering motor 31, and is a target steering torque that reflects the road surface condition to be perceived by the vehicle driver.

The torque feedforward control unit 52 receives the final target steering torque Tₕₕ* calculated by the sixth calculator 71. The torque feedforward control unit 52 calculates the first feedforward control torque T_{ff1} by performing feedforward control based on the final target steering torque Tₕₕ*.

The torque feedback control unit 53 receives the steering torque Tₕ detected by the torque sensor 42 and the final target steering torque Tₕₕ* calculated by the sixth calculator 71. The torque feedback control unit 53 calculates the first feedback control torque T_{fb1} by performing feedback control of the steering torque Tₕ such that the steering torque Tₕ detected by the torque sensor 42 follows the final target steering torque Tₕₕ*.

The present embodiment achieves the following functions and effects. (2-1) The angular axial force F1 calculated based on the target pinion angle θₚ* is a robust axial force that is less susceptible to disturbances, i.e., an axial force that does not include the road information to be communicated to the vehicle driver. Therefore, the target steering torque Tₕ* calculated based on the angular axial force F1 does not include the road information to be communicated to the vehicle driver. The second disturbance torque T_{ob2} calculated by the second disturbance estimator 65 includes the road information to be communicated to the vehicle driver. Therefore, the road information to be communicated to the vehicle driver is extracted from the second disturbance torque T_{ob2}, and the extracted road information is provided to the target steering torque Tₕ*. Thus, only the road information to be communicated to the vehicle driver can be superimposed on the target steering torque Tₕ*. By using the final target steering torque Tₕₕ* including the road information, the assist torque command value Tₐₛ* that reflects the road information to be communicated to the vehicle driver can be obtained. By applying an assist force corresponding to the assist torque command value Tₐₛ* to the steering wheel 5, the vehicle driver can be given an appropriate tactile feedback according to the road surface condition. The vehicle driver can perceive the road surface condition as the tactile feedback via the steering wheel 5.

### <Fifth Embodiment>

Next, a fifth embodiment of the steering control device will be described. The present embodiment differs from the fourth embodiment in terms of the configuration of the axial torque calculation unit 62. Therefore, the same members and configurations as those in the fourth embodiment will be denoted by the same signs as those in the fourth embodiment, and detailed description thereof will be omitted.

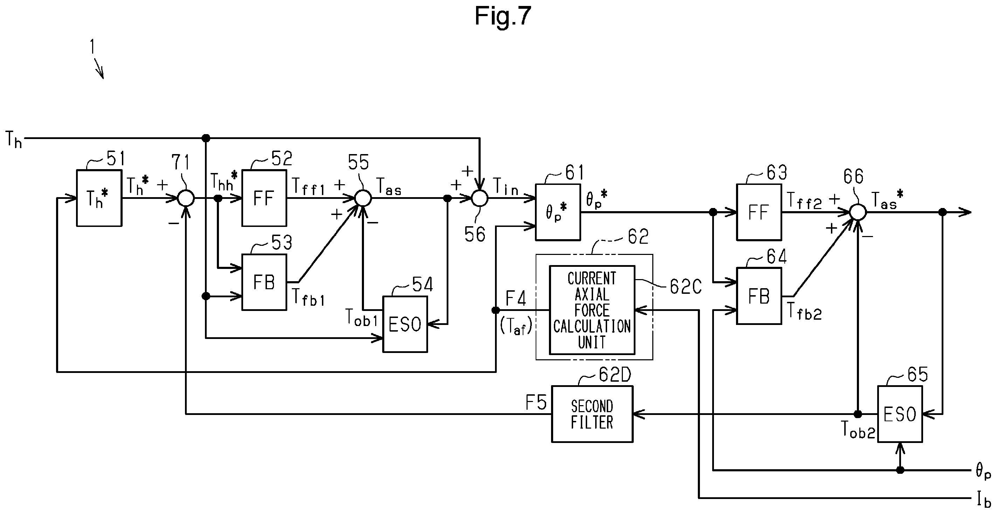

As shown in FIG. 7, the axial torque calculation unit 62 includes the current axial force calculation unit 62C instead of the angular axial force calculation unit 62A. The steering control device 1 includes the second filter 62D instead of the first filter 62B.

The current axial force calculation unit 62C calculates the current axial force F4 as the axial torque T_{af} based on the value of the current I_{b} of the steering motor 31. The target steering torque calculation unit 51 receives the current axial force F4 calculated by the current axial force calculation unit 62C and serving as the axial torque T_{af}, and calculates the target steering torque Tₕ* based on the received current axial force F14. The second filter 62D extracts the frequency component that is unnecessary for the steering feel from the second disturbance torque T_{ob2}, and uses it as the second adjustment amount F5 for the target steering torque Tₕ*.

The sixth calculator 71 receives the target steering torque Tₕ* calculated by the target steering torque calculation unit 51 and the second adjustment amount F5 that is the frequency component extracted by the second filter 62D. The sixth calculator 71 calculates the final target steering torque Tₕₕ* by subtracting the second adjustment amount F5 from the target steering torque Tₕ*. The final target steering torque Tₕₕ* is a final target steering torque to be used in the control of the steering motor 31, and is a target steering torque obtained by removing the viscous component and the frictional component of the steering system 2.

### <Functions and Effects of Fifth Embodiment>

The fifth embodiment achieves the following functions and effects.
(3-1) The current axial force F4 calculated based on the value of the current I_{b} of the steering motor 31 includes the road information to be communicated to the vehicle driver and the unnecessary information that need not be communicated to the vehicle driver. Therefore, the target steering torque Tₕ* calculated based on the current axial force F4 also includes the road information to be communicated to the vehicle driver and the unnecessary information that need not be communicated to the vehicle driver. The unnecessary information includes, for example, the viscous component and the frictional component of the steering system 2. The second disturbance torque T_{ob2} calculated by the second disturbance estimator 65 includes the viscous component and the frictional component of the steering system 2. Therefore, the viscous component and the frictional component of the steering system 2 are extracted from the second disturbance torque T_{ob2}, and the extracted viscous component and the extracted frictional component are subtracted from the target steering torque Tₕ*. Thus, the unnecessary information can be removed from the target steering torque Tₕ*. By using the target steering torque Tₕ* obtained by removing the unnecessary information, the assist torque command value Tₐₛ* in which the viscous component and the frictional component of the steering system 2 are reduced is obtained. By applying an assist force corresponding to the assist torque command value Tₐₛ* to the steering wheel 5, it is possible to suppress the occurrence of a case where the viscous sensation and the frictional sensation of the steering system 2 are conveyed to the vehicle driver. Thus, the vehicle driver can be given a clear steering feel according to the road surface condition.

### <Sixth Embodiment>

Next, a sixth embodiment of the steering control device will be described. The present embodiment differs from the first embodiment in terms of the configuration of the steering control device 1. Therefore, the same members and configurations as those in the first embodiment will be denoted by the same signs as those in the first embodiment, and detailed description thereof will be omitted.

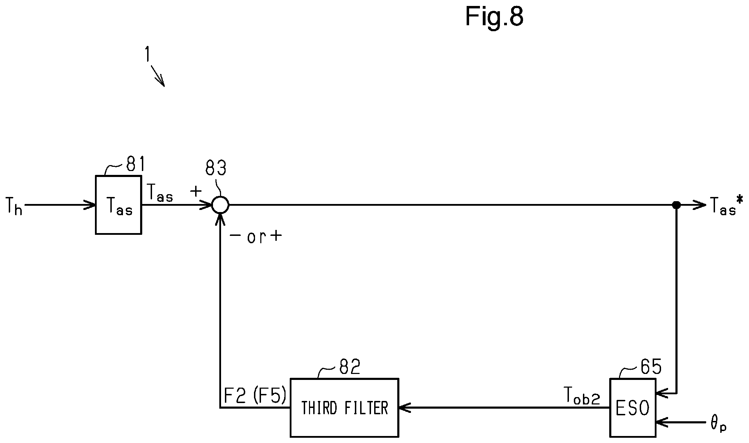

As shown in FIG. 8, the steering control device 1 includes an assist torque calculation unit 81, a third filter 82, a seventh calculator 83, and the second disturbance estimator 65. The second disturbance estimator 65 is the same as in the first embodiment.

The assist torque calculation unit 81 receives the steering torque Tₕ detected by the torque sensor 42. The assist torque calculation unit 81 calculates the assist torque Tₐₛ based on the steering torque Tₕ. The assist torque Tₐₛ is the basis for the calculation of the assist torque command value Tₐₛ*, and is a torque in the same direction as the steering direction of the steering wheel 5. The absolute value of the assist torque Tₐₛ increases as the absolute value of the steering torque Tₕ increases.

The assist torque calculation unit 81 may calculate the assist torque Tₐₛ in consideration of the vehicle speed V. In this case, the absolute value of the assist torque Tₐₛ may increase as the absolute value of the steering torque Tₕ increases, and as the vehicle speed V decreases.

The third filter 82 performs at least one of the first signal processing and the second signal processing on the second disturbance torque T_{ob2} calculated by the second disturbance estimator 65. The first signal processing is processing of extracting the frequency component that is important for the steering feel from the second disturbance torque T_{ob2} and using it as the first adjustment amount F2 for the assist torque Tₐₛ. The second signal processing is processing of extracting the frequency component that is unnecessary for the steering feel from the second disturbance torque T_{ob2} and using it as the second adjustment amount F5 for the assist torque Tₐ.

The seventh calculator 83 receives the assist torque Tₐₛ and the first adjustment amount F2 when the third filter 82 performs the first signal processing. The seventh calculator 83 calculates the assist torque command value Tₐₛ* by adding the first adjustment amount F2 to the assist torque Tₐₛ. Thus, the assist torque command value Tₐₛ* provided with the road information is obtained.

The seventh calculator 83 receives the assist torque Tₐₛ and the second adjustment amount F5 when the third filter 82 performs the second signal processing. The seventh calculator 83 calculates the assist torque command value Tₐₛ* by subtracting the second adjustment amount F5 from the assist torque Tₐₛ. Thus, the assist torque command value Tₐₛ* in which the unnecessary information is reduced, i.e., the viscous component and the frictional component of the steering system 2 are reduced, is obtained.

The seventh calculator 83 receives the assist torque Tₐₛ, the first adjustment amount F2, and the second adjustment amount F5 when the third filter 82 performs both the first signal processing and the second signal processing. The seventh calculator 83 calculates the assist torque command value Tₐₛ* by subtracting the second adjustment amount F5 from the value obtained by adding the first adjustment amount F2 to the assist torque Tₐₛ. The seventh calculator 83 may calculate the assist torque command value Tₐₛ* by adding the first adjustment amount F2 to the value obtained by subtracting the second adjustment amount F5 from the assist torque Tₐₛ. Thus, the assist torque command value Tₐₛ* in which the road information is provided and the viscous component and the frictional component of the steering system 2 are reduced is obtained.

### <Functions and Effects of Sixth Embodiment>

The sixth embodiment achieves the following functions and effects.
(4-1) The steering torque Tₕ detected by the torque sensor 42 does not include the road information to be communicated to the vehicle driver. The seventh calculator 83 receives the assist torque Tₐₛ and the first adjustment amount F2 when the third filter 82 performs the first signal processing. The first adjustment amount F2 is obtained by extracting the frequency component that is important for the steering feel from the second disturbance torque T_{ob2}. The seventh calculator 83 calculates the assist torque command value Tₐₛ* by adding the first adjustment amount F2 to the assist torque Tₐₛ. Thus, the assist torque command value Tₐₛ* provided with the road information is obtained. By applying an assist force corresponding to the assist torque command value Tₐₛ* to the steering wheel 5, the vehicle driver can be given an appropriate tactile feedback according to the road surface condition. The vehicle driver can perceive the road surface condition as the tactile feedback via the steering wheel 5.

(4-2) The steering torque Tₕ detected by the torque sensor 42 includes the unnecessary information that need not be communicated to the vehicle driver. The unnecessary information includes, for example, the viscous component and the frictional component of the steering system 2. The seventh calculator 83 receives the assist torque Tₐₛ and the second adjustment amount F5 when the third filter 82 performs the second signal processing. The second adjustment amount F5 is obtained by extracting the frequency component that is unnecessary for the steering feel from the second disturbance torque T_{ob2}. The seventh calculator 83 calculates the assist torque command value Tₐₛ* by subtracting the second adjustment amount F5 from the assist torque Tₐₛ. Thus, the assist torque command value Tₐₛ* in which the unnecessary information is reduced, i.e., the viscous component and the frictional component of the steering system 2 are reduced, is obtained. By applying an assist force corresponding to the assist torque command value Tₐₛ* to the steering wheel 5, it is possible to suppress the occurrence of a case where the viscous sensation and the frictional sensation of the steering system 2 are conveyed to the vehicle driver. Thus, the vehicle driver can be given a clear steering feel according to the road surface condition.

(4-3) The seventh calculator 83 receives the assist torque Tₐₛ, the first adjustment amount F2, and the second adjustment amount F5 when the third filter 82 performs both the first signal processing and the second signal processing. For example, the seventh calculator 83 calculates the assist torque command value Tₐₛ* by subtracting the second adjustment amount F5 from the value obtained by adding the first adjustment amount F2 to the assist torque Tₐₛ. Thus, the assist torque command value Tₐₛ* in which the road information is provided and the viscous component and the frictional component of the steering system 2 are reduced is obtained. By applying an assist force corresponding to the assist torque command value Tₐₛ* to the steering wheel 5, the vehicle driver can be given an appropriate tactile feedback according to the road surface condition. By applying the assist force corresponding to the assist torque command value Tₐₛ* to the steering wheel 5, it is possible to suppress the occurrence of a case where the viscous sensation and the frictional sensation of the steering system 2 are conveyed to the vehicle driver.

### <Seventh Embodiment>

Next, a seventh embodiment of the steering control device will be described. The present embodiment differs from the sixth embodiment in terms of the configuration of the steering control device 1. Therefore, the same members and configurations as those in the sixth embodiment will be denoted by the same signs as those in the sixth embodiment, and detailed description thereof will be omitted.

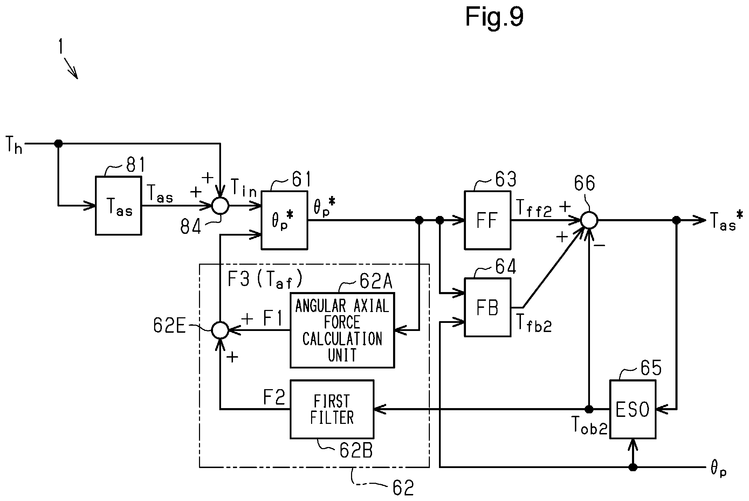

As shown in FIG. 9, the steering control device 1 includes the assist torque calculation unit 81, an eighth calculator 84, the target angle calculation unit 61, the axial torque calculation unit 62, the angle feedforward control unit 63, the angle feedback control unit 64, the second disturbance estimator 65, and the third calculator 66.

The assist torque calculation unit 81 is the same as in the sixth embodiment shown in FIG. 8. The third filter 82 in the sixth embodiment is omitted. The target angle calculation unit 61, the angle feedforward control unit 63, the angle feedback control unit 64, the second disturbance estimator 65, and the third calculator 66 are the same as in the first embodiment shown in FIG. 2.

The assist torque calculation unit 81 calculates the assist torque Tₐₛ based on the steering torque Tₕ. The eighth calculator 84 receives the assist torque Tₐₛ calculated by the assist torque calculation unit 81 and the steering torque Tₕ detected by the torque sensor 42. The eighth calculator 84 calculates the input torque Tᵢₙ by adding the assist torque Tₐₛ and the steering torque Tₕ.

The axial torque calculation unit 62 is the same as in the second embodiment shown in FIG. 4. That is, the axial torque calculation unit 62 includes the angular axial force calculation unit 62A, the first filter 62B, and the fourth calculator 62E.

The angular axial force calculation unit 62A calculates the angular axial force F1 based on the target pinion angle θₚ*. The first filter 62B extracts the frequency component that is important for the steering feel from the second disturbance torque T_{ob2} calculated by the second disturbance estimator 65, and uses it as the first adjustment amount F2 for the angular axial force F1. The fourth calculator 62E calculates the final angular axial force F3 as the axial torque T_{af} by adding the first adjustment amount F2 to the angular axial force F1.

The target angle calculation unit 61 receives the input torque Tᵢₙ calculated by the eighth calculator 84 and the axial torque T_{af} calculated by the axial torque calculation unit 62. The target angle calculation unit 61 calculates the target pinion angle θₚ* based on the input torque Tᵢₙ and the axial torque T_{af}.

According to the present embodiment, the same effect as the effect (1-1) of the first embodiment can be obtained.

### <Eighth Embodiment>

Next, an eighth embodiment of the steering control device will be described. The present embodiment differs from the seventh embodiment in terms of the configuration of the axial torque calculation unit 62. Therefore, the same members and configurations as those in the seventh embodiment will be denoted by the same signs as those in the seventh embodiment, and detailed description thereof will be omitted.

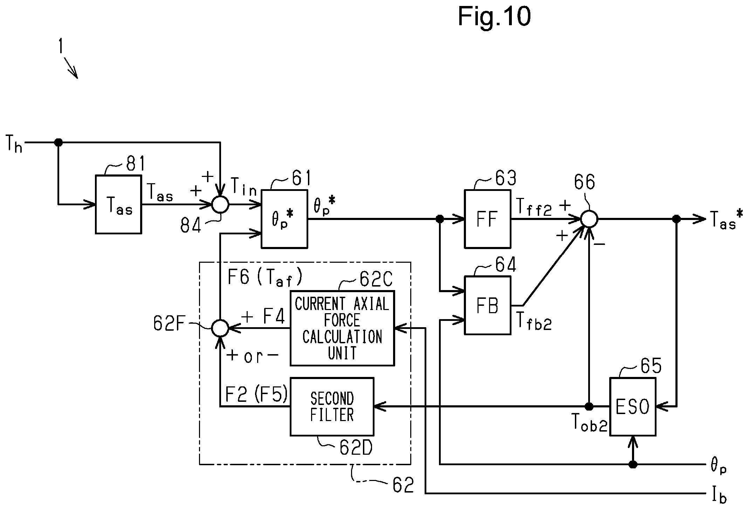

As shown in FIG. 10, the axial torque calculation unit 62 includes the current axial force calculation unit 62C, the second filter 62D, and the fifth calculator 62F as in the third embodiment shown in FIG. 5.

The current axial force calculation unit 62C calculates the current axial force F4 based on the value of the current I_{b} of the steering motor 31. However, the second filter 62D has the same function as the third filter 82 in the sixth embodiment shown in FIG. 8. That is, the second filter 62D performs at least one of the first signal processing and the second signal processing on the second disturbance torque T_{ob2} calculated by the second disturbance estimator 65. The first signal processing is processing of extracting the frequency component that is important for the steering feel from the second disturbance torque T_{ob2} and using it as the first adjustment amount F2 for the assist torque Tₐₛ. The second signal processing is processing of extracting the frequency component that is unnecessary for the steering feel from the second disturbance torque T_{ob2} and using it as the second adjustment amount F5 for the assist torque Tₐ.

The fifth calculator 62F has the same calculation function as the seventh calculator 83 in the sixth embodiment shown in FIG. 8. That is, the fifth calculator 62F receives the current axial force F4 and the first adjustment amount F2 when the second filter 62D performs the first signal processing. The fifth calculator 62F calculates the final current axial force F6 as the axial torque T_{af} by adding the first adjustment amount F2 to the current axial force F4. Thus, the assist torque command value Tₐₛ* with the amplified road information is obtained.

The fifth calculator 62F receives the current axial force F4 and the second adjustment amount F5 when the second filter 62D performs the second signal processing. The fifth calculator 62F calculates the final current axial force F6 as the axial torque T_{af} by subtracting the second adjustment amount F5 from the current axial force F4. Thus, the assist torque command value Tₐₛ* in which the unnecessary information is reduced, i.e., the viscous component and the frictional component of the steering system 2 are reduced, is obtained.

The fifth calculator 62F receives the current axial force F4, the first adjustment amount F2, and the second adjustment amount F5 when the second filter 62D performs both the first signal processing and the second signal processing. The fifth calculator 62F calculates the final current axial force F6 as the axial torque T_{af} by subtracting the second adjustment amount F5 from the value obtained by adding the first adjustment amount F2 to V. The fifth calculator 62F may calculate the final current axial force F6 as the axial torque T_{af} by adding the first adjustment amount F2 to the value obtained by subtracting the second adjustment amount F5 from the current axial force F4. Thus, the assist torque command value Tₐₛ* in which the road information is amplified and the viscous component and the frictional component of the steering system 2 are reduced is obtained.

The target angle calculation unit 61 receives the input torque Tᵢₙ calculated by the eighth calculator 84 and the axial torque T_{af} calculated by the axial torque calculation unit 62. The target angle calculation unit 61 calculates the target pinion angle θₚ* based on the input torque Tᵢₙ and the axial torque T_{af}.

According to the present embodiment, the same effects as the effects (4-1), (4-2), and (4-3) of the sixth embodiment shown in FIG. 8 can be obtained. The eighth embodiment may be combined with the seventh embodiment. In this case, the axial torque calculation unit 62 has the same configuration as in the first embodiment shown in FIG. 3. That is, the axial torque calculation unit 62 includes the angular axial force calculation unit 62A, the first filter 62B, the current axial force calculation unit 62C, the second filter 62D, the fourth calculator 62E, the fifth calculator 62F, and the mixed axial force calculation unit 62G.

### <Ninth Embodiment>

Next, a ninth embodiment of the steering control device will be described. The present embodiment differs from the first embodiment in that the steering system 2 that is the controlled object of the steering control device 1 is not the electric power steering system but is a steer-by-wire steering system 2. The steer-by-wire steering system 2 basically has the same configuration as the electric power steering system shown in FIG. 1. Therefore, the same members and configurations as those in the first embodiment will be denoted by the same signs as those in the first embodiment, and detailed description thereof will be omitted.

### <Configuration of Steering System 2>

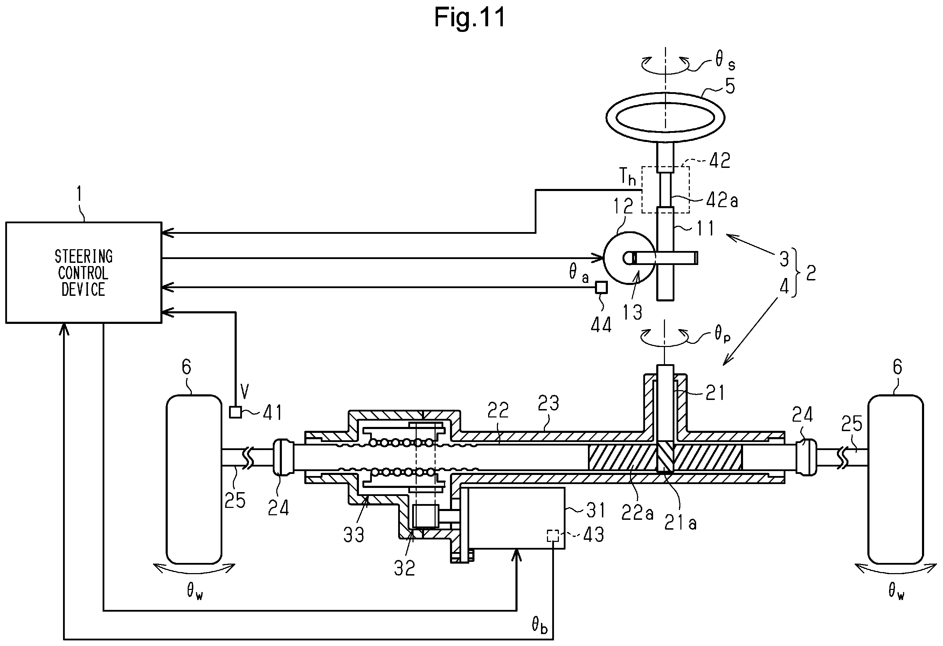

As shown in FIG. 11, the steer-by-wire steering system 2 includes the steering mechanism 3 and the steering operation mechanism 4. The steering mechanism 3 and the steering operation mechanism 4 are mechanically separated such that power cannot be transmitted mechanically.

The steering mechanism 3 includes the steering shaft 11, a reaction motor 12, and a speed reducer 13. The reaction motor 12 is a source of a steering reaction force to be applied to the steering shaft 11. The steering reaction force is a force in a direction opposite to the steering direction of the steering wheel 5. The reaction motor 12 is, for example, a three-phase brushless motor. The speed reducer 13 is provided near the second end of the steering shaft 11 relative to the torque sensor 42. The second end is an end opposite to the first end of the steering shaft 11 to which the steering wheel 5 is connected. The speed reducer 13 reduces the speed of rotation of the reaction motor 12, and transmits the rotation reduced in speed to the steering shaft 11.

The steering operation mechanism 4 includes the pinion shaft 21, the steered shaft 22, and the housing 23 as in the first embodiment. The pinion shaft 21 and the steering shaft 11, i.e., the steering wheel 5 and the steered wheels 6, are mechanically separated such that power cannot be transmitted mechanically. The steering operation mechanism 4 includes the steering motor 31, the transmission mechanism 32, and the conversion mechanism 33 as in the first embodiment. The steering motor 31 is a source of a steering force to be applied to the steered shaft 22. The steering force is a force for steering the steered wheels 6.

The steering control device 1 receives detection results from on-board sensors. The sensors include the vehicle speed sensor 41, the torque sensor 42, and two rotation angle sensors 43, 44. The rotation angle sensor 44 is provided on the reaction motor 12. The rotation angle sensor 44 detects a rotation angle θₐ of the reaction motor 12. For example, the rotation angle θₐ of the reaction motor 12 is a positive value when the steering wheel 5 is steered to the right, and a negative value when the steering wheel 5 is steered to the left.

The steering control device 1 performs reaction force control. The steering control device 1 controls the operation of the reaction motor 12 using the detection results from the vehicle speed sensor 41, the torque sensor 42, and the rotation angle sensor 44. The steering control device 1 controls the power supply to the reaction motor 12 such that the reaction motor 12 generates a steering reaction force corresponding to the steering torque Tₕ.

The steering control device 1 performs steering operation control. The steering control device 1 controls the operation of the steering motor 31 using the detection result from the rotation angle sensor 43. The steering control device 1 controls the power supply to the steering motor 31 such that the steered wheels 6 are steered according to the steering state of the steering wheel 5.

### <Configuration of Steering Control Device 1>

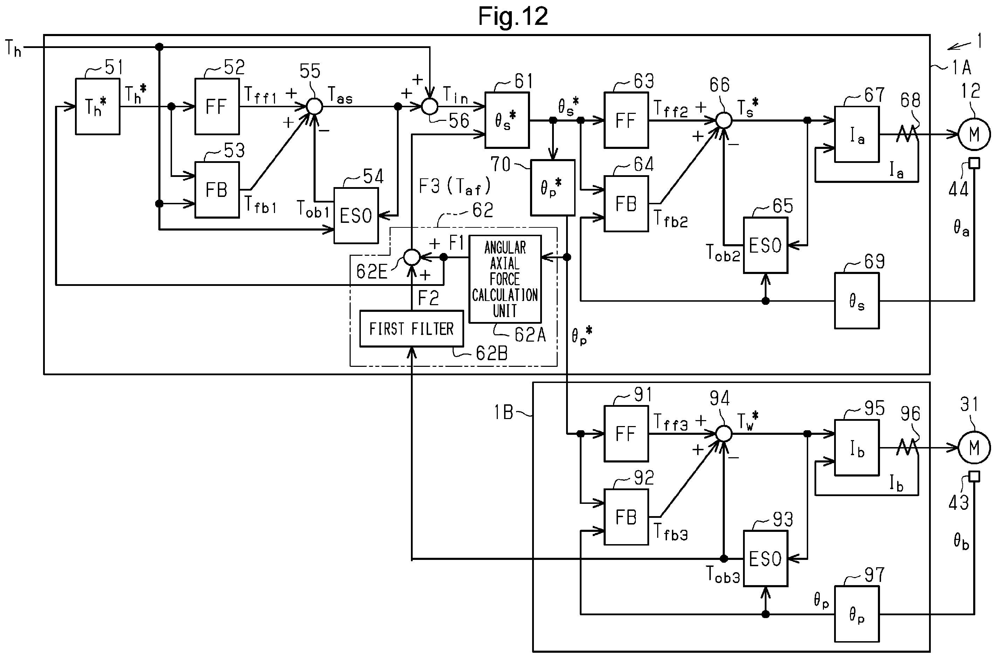

As shown in FIG. 12, the steering control device 1 includes a reaction force control unit 1A and a steering operation control unit 1B. The controlled object of the reaction force control unit 1A is the steering mechanism 3. The reaction force control unit 1A performs the reaction force control. The controlled object of the steering operation control unit 1B is the steering operation mechanism 4. The steering operation control unit 1B performs the steering operation control.

### <Reaction Force Control Unit 1A>

The reaction force control unit 1A basically has the same configuration as in the first embodiment shown in FIG. 2. That is, the reaction force control unit 1A includes the target steering torque calculation unit 51, the torque feedforward control unit 52, the torque feedback control unit 53, the first disturbance estimator 54, the first calculator 55, and the second calculator 56. The reaction force control unit 1A further includes the target angle calculation unit 61, the axial torque calculation unit 62, the angle feedforward control unit 63, the angle feedback control unit 64, the second disturbance estimator 65, and the third calculator 66. The steering control device 1 further includes the current control unit 67, the current sensor 68, and the angle calculation unit 69. The reaction force control unit 1A further includes a target pinion angle calculation unit 70.

The target steering torque calculation unit 51 calculates the target steering torque Tₕ* based on the angular axial force F1 calculated by the axial torque calculation unit 62. However, the target steering torque calculation unit 51 may calculate the target steering torque Tₕ* based on the axial torque T_{af} calculated by the axial torque calculation unit 62.

The torque feedforward control unit 52 calculates the first feedforward control torque T_{ff1} by performing feedforward control based on the target steering torque Tₕ*. The torque feedback control unit 53 calculates the first feedback control torque T_{fb1} by performing feedback control of the steering torque Tₕ such that the steering torque Tₕ detected by the torque sensor 42 follows the target steering torque Tₕ*.

The first disturbance estimator 54 calculates the first disturbance torque T_{ob1} based on the steering torque Tₕ and the assist torque Tₐₛ. The first calculator 55 calculates the assist torque Tₐₛ by adding the first feedforward control torque T_{ff1} and the first feedback control torque T_{fb1} and subtracting the first disturbance torque T_{ob1} from the value obtained by the addition.

The second calculator 56 calculates the input torque Tᵢₙ by adding the steering torque Tₕ and the assist torque Tₐₛ. The target angle calculation unit 61 calculates a target steering angle θₛ* based on the input torque Tᵢₙ and the axial torque T_{af}. The target steering angle θₛ* is a target value of the steering angle θₛ that is the rotation angle of the steering wheel 5. The target angle calculation unit 61 determines the final input torque Tᵢₙ for the steering wheel 5 by subtracting the axial torque T_{af} calculated by the axial torque calculation unit 62 from the input torque Tᵢₙ calculated by the second calculator 56. The target angle calculation unit 61 calculates the target steering angle θₛ* from the final input torque Tᵢₙ based on an ideal model expressed by the following equation (2). The ideal model is one that models the steering angle θₛ of the steering wheel 5 corresponding to the ideal steered angle θ_{w} according to the input torque Tᵢₙ on the assumption that the steering wheel 5 and the steered wheels 6 are mechanically connected.${T}_{in} = J ⋅ {{θ}_{s}}^{∗} " + C ⋅ {{θ}_{s}}^{∗} ′ + K ⋅ {{θ}_{s}}^{∗}$ (2) "J" is an inertia coefficient that models a moment of inertia of the steering system 2. "C" is a viscous coefficient that models friction etc. of the steering system 2. "K" is a spring coefficient that models, as a spring, specifications such as the suspension and wheel alignment of a vehicle on which the steering system 2 is mounted. The inertia coefficient J, the viscous coefficient C, and the spring coefficient K take values corresponding to the vehicle speed V detected by the vehicle speed sensor 41. "θₛ*"" is a second time derivative of the target steering angle θₛ*, and "θₛ*‴ is a first time derivative of the target steering angle θₛ*. The symbol "·" in the equation (2) indicates multiplication.

The target pinion angle calculation unit 70 receives the target steering angle θₛ* calculated by the target angle calculation unit 61. The target pinion angle calculation unit 70 calculates the target pinion angle θₚ* based on the target steering angle θₛ*. The target pinion angle calculation unit 70 calculates the target pinion angle θₚ* such that a steering angle ratio set depending on product specifications etc. is achieved. The steering angle ratio is the ratio of the steered angle θ_{w} to the steering angle θₛ.

For example, the axial torque calculation unit 62 has the same configuration as in the second embodiment shown in FIG. 4. That is, the axial torque calculation unit 62 includes the angular axial force calculation unit 62A, the first filter 62B, and the fourth calculator 62E. The angular axial force calculation unit 62A calculates the angular axial force F1 based on the target pinion angle θₚ*. The first filter 62B extracts the frequency component that is important for the steering feel from the second disturbance torque T_{ob2} calculated by the second disturbance estimator 65, and uses it as the first adjustment amount F2 for the angular axial force F1. The fourth calculator 62E calculates the final angular axial force F3 as the axial torque T_{af} by adding the first adjustment amount F2 to the angular axial force F1.

The angle feedforward control unit 63 performs a process of compensating for a response delay caused by the inertia of the steering system 2 to improve the responsiveness of control. The angle feedforward control unit 63 receives the target pinion angle θₚ* calculated by the target pinion angle calculation unit 70. The angle feedforward control unit 63 calculates the second feedforward control torque T_{ff2} by performing feedforward control based on the target pinion angle θₚ*.

The angle calculation unit 69 calculates the steering angle θₛ of the steering wheel 5 based on the rotation angle θₐ of the reaction motor 12 detected by the rotation angle sensor 44. The steering angle θₛ is the rotation angle of the steering wheel 5. The angle calculation unit 69 calculates the steering angle θₛ by, for example, dividing the rotation angle θₐ by the reduction ratio of the speed reducer 13.

The angle feedback control unit 64 receives the target steering angle θₛ* calculated by the target angle calculation unit 61 and the steering angle θₛ calculated by the angle calculation unit 69. The angle feedback control unit 64 calculates the second feedback control torque T_{fb2} by performing feedback control of the steering angle θₛ such that the steering angle θₛ calculated by the angle calculation unit 69 follows the target steering angle θₛ*.

The second disturbance estimator 65 is configured to estimate and compensate for a disturbance torque. The disturbance torque is a nonlinear torque that occurs as a disturbance in the actual plant, namely the steering system 2, and is a torque, other than the torque generated by the reaction motor 12, that affects the steering angle θₛ. The second disturbance estimator 65 is, for example, an extended state observer. The second disturbance estimator 65 estimates the second disturbance torque T_{ob2} based on a nominal plant. The nominal plant is a model that simulates the actual plant, i.e., the steering system 2, that is the actual controlled object. The second disturbance estimator 65 receives the steering angle θₛ calculated by the angle calculation unit 69 and a reaction torque command value Tₛ* calculated by the third calculator 66. The second disturbance estimator 65 calculates the second disturbance torque T_{ob2} based on the steering angle θₛ and the reaction torque command value Tₛ*.

The third calculator 66 calculates the reaction torque command value Tₛ* by adding the second feedforward control torque T_{ff2} and the second feedback control torque T_{fb2} and subtracting the second disturbance torque T_{ob2} from the value obtained by the addition. The reaction torque command value Tₛ* is a target value of a torque to be generated by the reaction motor 12, i.e., the steering reaction force.

The current sensor 68 is provided in a power supply path between the current control unit 67 and the reaction motor 12. The current sensor 68 detects a current Iₐ supplied to the reaction motor 12. The current control unit 67 receives the reaction torque command value Tₛ* calculated by the third calculator 66. The current control unit 67 supplies electric power corresponding to the reaction torque command value Tₛ* to the reaction motor 12. That is, the current control unit 67 calculates a current command value based on the reaction torque command value Tₛ*. The current command value is a target value of the current to be supplied to the reaction motor 12. The current control unit 67 detects the current Iₐ supplied to the reaction motor 12 via the current sensor 68, and performs feedback control of the detected current Iₐ. The current control unit 67 calculates a deviation between the current command value and the value of the current Iₐ detected by the current sensor 68, and controls the power supply to the reaction motor 12 so as to eliminate the calculated deviation. The reaction motor 12 thus generates a torque corresponding to the reaction torque command value Tₛ*.

### <Steering Operation Control Unit 1B>

The steering operation control unit 1B includes a second angle feedforward control unit 91, a second angle feedback control unit 92, a third disturbance estimator 93, and a ninth calculator 94. The steering operation control unit 1B further includes a current control unit 95, a current sensor 96, and an angle calculation unit 97.

The second angle feedforward control unit 91 performs a process of compensating for a response delay caused by the inertia of the steering system 2 to improve the responsiveness of control. The second angle feedforward control unit 91 receives the target pinion angle θₚ* calculated by the target pinion angle calculation unit 70. The second angle feedforward control unit 91 calculates a third feedforward control torque T_{ff3} by performing feedforward control based on the target pinion angle θₚ*.

The angle calculation unit 97 calculates the pinion angle θₚ based on the rotation angle θ_{b} of the steering motor 31 detected by the rotation angle sensor 43. The second angle feedback control unit 92 receives the target pinion angle θₚ* calculated by the target pinion angle calculation unit 70 and the pinion angle θₚ calculated by the angle calculation unit 97. The second angle feedback control unit 92 calculates a third feedback control torque T_{fb3} by performing feedback control of the pinion angle θₚ such that the pinion angle θₚ calculated by the angle calculation unit 97 follows the target pinion angle θₚ*.

The third disturbance estimator 93 is configured to estimate and compensate for a disturbance torque. The disturbance torque is a nonlinear torque that occurs as a disturbance in the actual plant, namely the steering system 2, and is a torque, other than the torque generated by the steering motor 31, that affects the pinion angle θₚ. The third disturbance estimator 93 is, for example, an extended state observer. The third disturbance estimator 93 estimates a third disturbance torque T_{ob3} based on a nominal plant. The nominal plant is a model that simulates the actual plant, i.e., the steering system 2, that is the actual controlled object. The third disturbance estimator 93 receives the pinion angle θₚ calculated by the angle calculation unit 97 and a steering operation torque command value T_{w}* calculated by the ninth calculator 94. The third disturbance estimator 93 calculates the third disturbance torque T_{ob3} based on the pinion angle θₚ and the steering operation torque command value T_{w}*.

The ninth calculator 94 receives the third feedforward control torque T_{ff3} calculated by the second angle feedforward control unit 91, the third feedback control torque T_{fb3} calculated by the second angle feedback control unit 92, and the third disturbance torque T_{ob3} calculated by the third disturbance estimator 93. The ninth calculator 94 calculates the steering operation torque command value T_{w}* by adding the third feedforward control torque T_{ff3} and the third feedback control torque T_{fb3} and subtracting the third disturbance torque T_{ob3} from the value obtained by the addition. The steering operation torque command value T_{w}* is a target value of a torque to be generated by the steering motor 31, i.e., the steering force.

The current sensor 96 is provided in a power supply path between the current control unit 95 and the steering motor 31. The current sensor 96 detects the current I_{b} supplied to the steering motor 31. The current control unit 95 receives the steering operation torque command value T_{w}* calculated by the ninth calculator 94. The current control unit 95 supplies electric power corresponding to the steering operation torque command value T_{w}* to the steering motor 31. That is, the current control unit 95 calculates a current command value based on the steering operation torque command value T_{w}*. The current command value is a target value of the current to be supplied to the steering motor 31. The current control unit 95 detects the current I_{b} supplied to the steering motor 31 via the current sensor 96, and performs feedback control of the detected current I_{b}. The current control unit 95 calculates a deviation between the current command value and the value of the current I_{b} detected by the current sensor 96, and controls the power supply to the steering motor 31 so as to eliminate the calculated deviation. The steering motor 31 thus generates a torque corresponding to the steering operation torque command value T_{w}*.

### <Functions and Effects of Ninth Embodiment>

(5-1) The axial torque calculation unit 62 has the same configuration as in the second embodiment shown in FIG. 4. That is, the axial torque calculation unit 62 includes the angular axial force calculation unit 62A, the first filter 62B, and the fourth calculator 62E. Therefore, the following effects can be obtained.

The angular axial force F1 calculated based on the target pinion angle θₚ* is a robust axial force that is less susceptible to disturbances, i.e., an axial force that does not include the road information to be communicated to the vehicle driver. The road information is information indicating the condition of a road surface. The third disturbance torque T_{ob3} calculated by the third disturbance estimator 93 includes the road information to be communicated to the vehicle driver. The road information includes, for example, information that is necessary for the vehicle driver to perceive the road surface condition or the grip state of the steered wheels 6 on the road surface. Therefore, the road information to be communicated to the vehicle driver is extracted from the third disturbance torque T_{ob3}, and the extracted road information is provided to the angular axial force F1. Thus, only the road information to be communicated to the vehicle driver can be superimposed on the robust angular axial force F1. By using the final angular axial force F3 including the road information as the axial torque T_{af}, the reaction torque command value Tₛ* that reflects the road information to be communicated to the vehicle driver can be obtained. By applying a steering reaction force corresponding to the reaction torque command value Tₛ* to the steering wheel 5, the vehicle driver can be given an appropriate tactile feedback according to the road surface condition. The vehicle driver can perceive the road surface condition as the tactile feedback via the steering wheel 5.

(5-2) Depending on the product usage, the axial torque calculation unit 62 may have the same configuration as in the third embodiment shown in FIG. 5. In this case, the axial torque calculation unit 62 includes the current axial force calculation unit 62C, the second filter 62D, and the fifth calculator 62F. With this configuration, the following effects can be obtained.

That is, the current axial force F4 calculated based on the value of the current I_{b} of the steering motor 31 includes the road information to be communicated to the vehicle driver and the unnecessary information that need not be communicated to the vehicle driver. The unnecessary information includes, for example, the viscous component and the frictional component of the steering system 2. The friction and viscosity of the steering system 2 are pieces of information that need not be communicated to the vehicle driver. The third disturbance torque T_{ob3} calculated by the third disturbance estimator 93 includes the viscous component and the frictional component of the steering system 2. By extracting the viscous component and the frictional component of the steering system 2 from the third disturbance torque T_{ob3} and subtracting the extracted viscous component and the extracted frictional component from the current axial force F4, the unnecessary information can be removed from the current axial force F4. By using the final current axial force F6 obtained by removing the unnecessary information as the axial torque T_{af}, the reaction torque command value Tₛ* in which the viscous component and the frictional component of the steering system 2 are reduced is obtained. By applying a steering reaction force corresponding to the reaction torque command value Tₛ* to the steering wheel 5, it is possible to suppress the occurrence of a case where the viscous sensation and the frictional sensation of the steering operation mechanism 4 are conveyed to the vehicle driver. Thus, the vehicle driver can be given a clear steering feel according to the road surface condition.

(5-3) Depending on the product usage, the axial torque calculation unit 62 may have the same configuration as in the first embodiment shown in FIG. 3. In this case, the axial torque calculation unit 62 includes the angular axial force calculation unit 62A, the first filter 62B, the current axial force calculation unit 62C, the second filter 62D, the fourth calculator 62E, the fifth calculator 62F, and the mixed axial force calculation unit 62G. With this configuration, the following effects can be obtained.

That is, the mixed axial force calculation unit 62G calculates the axial torque T_{af} that is the mixed axial force by adding values obtained by multiplying the final angular axial force F3 and the final current axial force F6 by the distribution ratios that are set individually. The final angular axial force F3 is an axial force obtained by adding the road information to be communicated to the vehicle driver to the angular axial force F1 that does not include the road information to be communicated to the vehicle driver. The final current axial force F6 is an axial force obtained by removing the unnecessary information that need not be communicated to the vehicle driver from the current axial force F4 including the unnecessary information that need not be communicated to the vehicle driver. Therefore, the axial torque T_{af} provided with only the road information to be communicated to the vehicle driver is obtained regardless of the ratio at which the final angular axial force F3 and the final current axial force F6 are mixed. The axial torque T_{af} does not include the unnecessary information that need not be communicated to the vehicle driver. By applying a steering reaction force corresponding to the reaction torque command value Tₛ* calculated using the axial torque T_{af} to the steering wheel 5, the vehicle driver can be given an appropriate steering feel according to the road surface condition.

(5-4) Depending on the product usage, the axial torque calculation unit 62 may have the same configuration as in the fourth embodiment shown in FIG. 6. In this case, the axial torque calculation unit 62 includes the angular axial force calculation unit 62A. The first filter 62B is not the component of the axial torque calculation unit 62, but is present as a component of the reaction force control unit 1A. The reaction force control unit 1A includes the sixth calculator 71. The sixth calculator 71 calculates the final target steering torque Tₕₕ* by adding the first adjustment amount F2 to the target steering torque Tₕ*. The first adjustment amount F2 is the frequency component that is important for the steering feel and is, for example, the frequency component that is necessary for the vehicle driver to perceive the road surface condition or the grip state of the steered wheels 6 on the road surface in vibrations generated between the road surface and the steered wheels 6. With this configuration, the same effect as the effect (2-1) of the fourth embodiment shown in FIG. 6 can be obtained. Details are as follows.

That is, only the road information to be communicated to the vehicle driver can be superimposed on the target steering torque Tₕ*. By using the final target steering torque Tₕₕ* including the road information, the reaction torque command value Tₛ* that reflects the road information to be communicated to the vehicle driver can be obtained. By applying a steering reaction force corresponding to the reaction torque command value Tₛ* to the steering wheel 5, the vehicle driver can be given an appropriate tactile feedback according to the road surface condition. The vehicle driver can perceive the road surface condition as the tactile feedback via the steering wheel 5.

(5-5) Depending on the product usage, the axial torque calculation unit 62 may have the same configuration as in the fifth embodiment shown in FIG. 7. **In** this case, the axial torque calculation unit 62 includes the current axial force calculation unit 62C. The reaction force control unit 1A includes the second filter 62D and the sixth calculator 71. The second filter 62D is not the component of the axial torque calculation unit 62, but is present as a component of the reaction force control unit 1A. The sixth calculator 71 calculates the final target steering torque Tₕₕ* by subtracting the second adjustment amount F5 from the target steering torque Tₕ*. The second adjustment amount F5 is the frequency component that is unnecessary for the steering feel and is, for example, the frequency components related to the friction and viscosity of the steering system 2. With this configuration, the same effect as the effect (3-1) of the fifth embodiment shown in FIG. 7 can be obtained. Details are as follows.

That is, the unnecessary information can be removed from the target steering torque Tₕ*. By using the target steering torque Tₕ* obtained by removing the unnecessary information, the reaction torque command value Tₛ* in which the viscous component and the frictional component of the steering system 2 are reduced is obtained. By applying a steering reaction force corresponding to the reaction torque command value Tₛ* to the steering wheel 5, it is possible to suppress the occurrence of a case where the viscous sensation and the frictional sensation of the steering system 2 are conveyed to the vehicle driver. Thus, the vehicle driver can be given a clear steering feel according to the road surface condition.

### <Tenth Embodiment>

Next, a tenth embodiment of the steering control device will be described. The present embodiment differs from the ninth embodiment in terms of the configuration of the reaction force control unit 1A. Therefore, the same members and configurations as those in the ninth embodiment will be denoted by the same signs as those in the ninth embodiment, and detailed description thereof will be omitted.

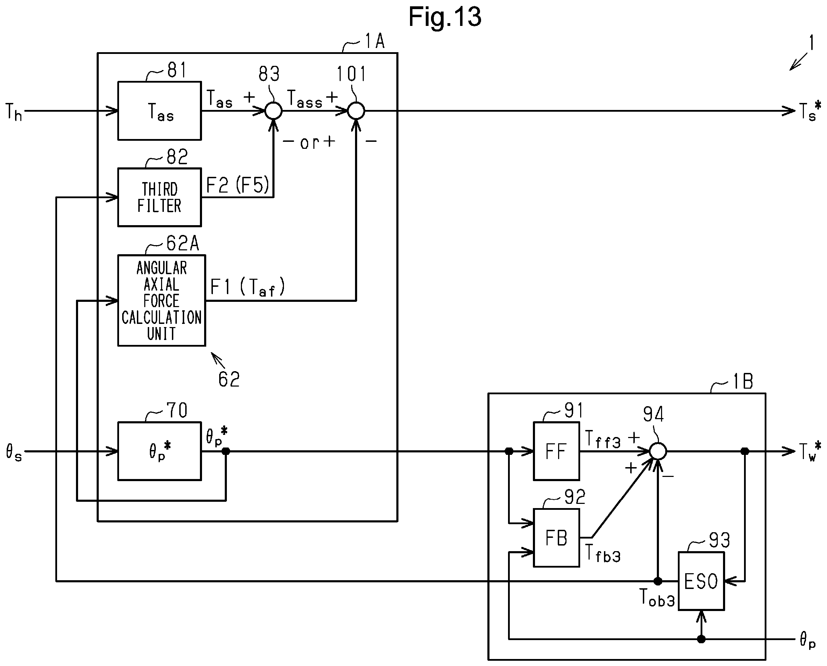

As shown in FIG. 13, the reaction force control unit 1A includes the assist torque calculation unit 81, the third filter 82, and the seventh calculator 83. The reaction force control unit 1A further includes the target pinion angle calculation unit 70, the angular axial force calculation unit 62A, and a tenth calculator 101.

The assist torque calculation unit 81 is the same as in the sixth embodiment shown in FIG. 8. The assist torque calculation unit 81 calculates the assist torque Tₐₛ based on the steering torque Tₕ. The third filter 82 is the same as in the sixth embodiment shown in FIG. 8. The third filter 82 performs at least one of the first signal processing and the second signal processing on the second disturbance torque T_{ob2} calculated by the second disturbance estimator 65. The first signal processing is processing of extracting the frequency component that is important for the steering feel from the second disturbance torque T_{ob2} and using it as the first adjustment amount F2 for the assist torque Tₐₛ. The second signal processing is processing of extracting the frequency component that is unnecessary for the steering feel from the second disturbance torque T_{ob2} and using it as the second adjustment amount F5 for the assist torque Tₐₛ.

The seventh calculator 83 is the same as in the sixth embodiment shown in FIG. 8. The seventh calculator 83 receives the assist torque Tₐₛ and the first adjustment amount F2 when the third filter 82 performs the first signal processing. The seventh calculator 83 calculates a final assist torque Tₐₛₛ by adding the first adjustment amount F2 to the assist torque Tₐₛ. Thus, the final assist torque Tₐₛₛ provided with the road information is obtained. The final assist torque Tₐₛₛ is the final assist torque Tₐₛ to be used in the calculation of the reaction torque command value Tₛ*.

The seventh calculator 83 receives the assist torque Tₐₛ and the second adjustment amount F5 when the third filter 82 performs the second signal processing. The seventh calculator 83 calculates the final assist torque Tₐₛₛ by subtracting the second adjustment amount F5 from the assist torque Tₐₛ. Thus, the final assist torque Tₐₛₛ in which the unnecessary information is reduced, i.e., the viscous component and the frictional component of the steering system 2 are reduced, is obtained.

The seventh calculator 83 receives the assist torque Tₐₛ, the first adjustment amount F2, and the second adjustment amount F5 when the third filter 82 performs both the first signal processing and the second signal processing. The seventh calculator 83 calculates the final assist torque Tₐₛₛ by subtracting the second adjustment amount F5 from the value obtained by adding the first adjustment amount F2 to the assist torque Tₐₛ. The seventh calculator 83 may calculate the final assist torque Tₐₛₛ by adding the first adjustment amount F2 to the value obtained by subtracting the second adjustment amount F5 from the assist torque Tₐₛ. Thus, the final assist torque Tₐₛₛ in which the road information is provided and the viscous component and the frictional component of the steering system 2 are reduced is obtained.

The target pinion angle calculation unit 70 is basically the same as in the ninth embodiment shown in FIG. 12. However, the target pinion angle calculation unit 70 receives the steering angle θₛ of the steering wheel 5 calculated by the angle calculation unit 69, and calculates the target pinion angle θₚ* based on the received steering angle θₛ. The angle calculation unit 69 is the same as in the ninth embodiment shown in FIG. 12. However, the angle calculation unit 69 is not shown in FIG. 13 for convenience of description.

The angular axial force calculation unit 62A is the same as in the ninth embodiment shown in FIG. 12. However, the angular axial force calculation unit 62A receives the target pinion angle θₚ* calculated by the target pinion angle calculation unit 70. The angular axial force calculation unit 62A calculates the angular axial force F1 as the axial torque T_{af} based on the target pinion angle θₚ*. The angular axial force calculation unit 62A constitutes the axial torque calculation unit 62.

The tenth calculator 101 receives the final assist torque Tₐₛₛ calculated by the seventh calculator 83 and the axial torque T_{af} calculated by the angular axial force calculation unit 62A. The tenth calculator 101 calculates the reaction torque command value Tₛ* by subtracting the axial torque T_{af} from the final assist torque Tₐₛₛ.

The reaction force control unit 1A includes the current control unit 67. The current control unit 67 is the same as in the ninth embodiment shown in FIG. 12. However, the current control unit 67 receives the reaction torque command value Tₛ* calculated by the tenth calculator 101, and supplies electric power corresponding to the received reaction torque command value Tₛ* to the reaction motor 12. The current control unit 67, the current sensor 68, and the reaction motor 12 are not shown in FIG. 13 for convenience of description.

The steering operation control unit 1B is the same as in the ninth embodiment shown in FIG. 12. The steering operation control unit 1B includes the second angle feedforward control unit 91, the second angle feedback control unit 92, the third disturbance estimator 93, and the ninth calculator 94. The current control unit 95, the current sensor 96, the angle calculation unit 97, and the steering motor 31 are not shown in FIG. 13 for convenience of description.

### <Functions and Effects of Tenth Embodiment>

The tenth embodiment achieves the following functions and effects.

(6-1) The steering torque Tₕ detected by the torque sensor 42 does not include the road information to be communicated to the vehicle driver. The seventh calculator 83 receives the assist torque Tₐₛ and the first adjustment amount F2 when the third filter 82 performs the first signal processing. The first adjustment amount F2 is obtained by extracting the frequency component that is important for the steering feel from the second disturbance torque T_{ob2}. The seventh calculator 83 calculates the final assist torque Tₐₛₛ by adding the first adjustment amount F2 to the assist torque Tₐₛ. The final assist torque Tₐₛₛ is the assist torque Tₐₛ provided with the road information. The tenth calculator 101 calculates the reaction torque command value Tₛ* by subtracting the axial torque T_{af} from the final assist torque Tₐₛₛ. Thus, the reaction torque command value Tₛ* provided with the road information is obtained. By applying a steering reaction force corresponding to the reaction torque command value Tₛ* to the steering wheel 5, the vehicle driver can be given an appropriate tactile feedback according to the road surface condition. The vehicle driver can perceive the road surface condition as the tactile feedback via the steering wheel 5.

(6-2) The steering torque Tₕ detected by the torque sensor 42 includes the unnecessary information that need not be communicated to the vehicle driver. The unnecessary information includes, for example, the viscous component and the frictional component of the steering system 2. The seventh calculator 83 receives the assist torque Tₐₛ and the second adjustment amount F5 when the third filter 82 performs the second signal processing. The second adjustment amount F5 is obtained by extracting the frequency component that is unnecessary for the steering feel from the second disturbance torque T_{ob2}. The seventh calculator 83 calculates the final assist torque Tₐₛₛ by subtracting the second adjustment amount F5 from the assist torque Tₐₛ. The final assist torque Tₐₛₛ is the assist torque Tₐₛ obtained by removing the unnecessary information. The tenth calculator 101 calculates the reaction torque command value Tₛ* by subtracting the axial torque T_{af} from the final assist torque Tₐₛₛ. Thus, the reaction torque command value Tₛ* in which the unnecessary information is reduced, i.e., the viscous component and the frictional component of the steering system 2 are reduced, is obtained. By applying a steering reaction force corresponding to the reaction torque command value Tₛ* to the steering wheel 5, it is possible to suppress the occurrence of a case where the viscous sensation and the frictional sensation of the steering system 2 are conveyed to the vehicle driver. Thus, the vehicle driver can be given a clear steering feel according to the road surface condition.

(6-3) The seventh calculator 83 receives the assist torque Tₐₛ, the first adjustment amount F2, and the second adjustment amount F5 when the third filter 82 performs both the first signal processing and the second signal processing. For example, the seventh calculator 83 calculates the final assist torque Tₐₛₛ by subtracting the second adjustment amount F5 from the value obtained by adding the first adjustment amount F2 to the assist torque Tₐₛ. The final assist torque Tₐₛₛ is the assist torque Tₐₛ in which the road information is provided and the viscous component and the frictional component of the steering system 2 are reduced. The tenth calculator 101 calculates the reaction torque command value Tₛ* by subtracting the axial torque T_{af} from the final assist torque Tₐₛₛ. Thus, the reaction torque command value Tₛ* in which the road information is provided and the viscous component and the frictional component of the steering system 2 are reduced is obtained. By applying a steering reaction force corresponding to the reaction torque command value Tₛ* to the steering wheel 5, the vehicle driver can be given an appropriate tactile feedback according to the road surface condition. By applying an assist force corresponding to the reaction torque command value Tₛ* to the steering wheel 5, it is possible to suppress the occurrence of a case where the viscous sensation and the frictional sensation of the steering system 2 are conveyed to the vehicle driver.

(6-4) Depending on the product usage, the angular axial force calculation unit 62A may be replaced with the current axial force calculation unit 62C. The current axial force calculation unit 62C is the same as in the first embodiment shown in FIG. 3. The current axial force calculation unit 62C calculates the current axial force F4 as the axial torque T_{af} based on the value of the current I_{b} of the steering motor 31. The tenth calculator 101 calculates the reaction torque command value Tₛ* by subtracting the axial torque T_{af} from the final assist torque Tₐₛₛ. In this way as well, it is possible to obtain at least one of the reaction torque command value Tₛ* provided with the road information and the reaction torque command value Tₛ* in which the unnecessary information is reduced.

### <Eleventh Embodiment>

Next, an eleventh embodiment of the steering control device will be described. The present embodiment differs from the tenth embodiment in terms of the configuration of the reaction force control unit 1A. Therefore, the same members and configurations as those in the tenth embodiment will be denoted by the same signs as those in the tenth embodiment, and detailed description thereof will be omitted.

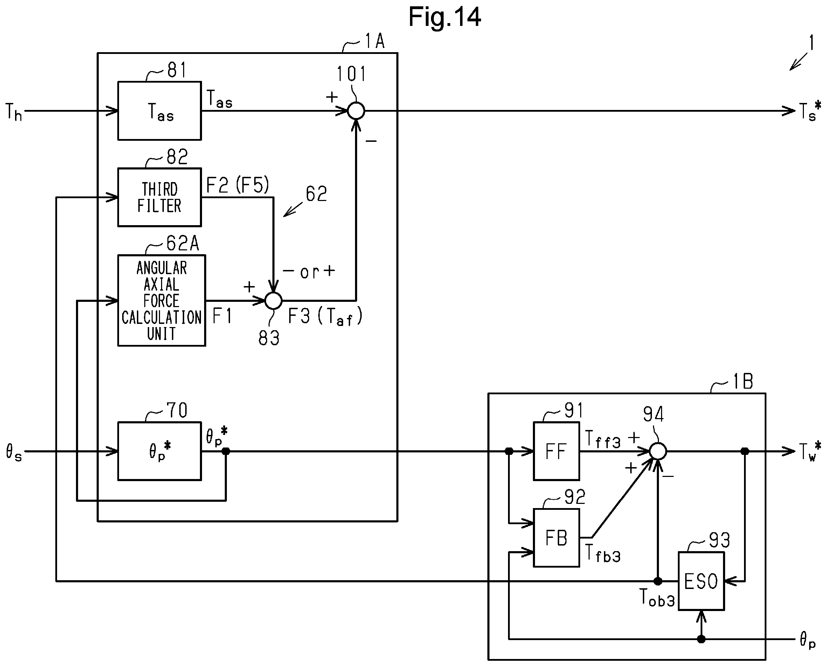

As shown in FIG. 14, the reaction force control unit 1A includes the assist torque calculation unit 81, the third filter 82, and the seventh calculator 83. The reaction force control unit 1A further includes the target pinion angle calculation unit 70, the angular axial force calculation unit 62A, and the tenth calculator 101. The third filter 82, the angular axial force calculation unit 62A, and the seventh calculator 83 constitute the axial torque calculation unit 62.

The assist torque calculation unit 81 calculates the assist torque Tₐₛ based on the steering torque Tₕ. The third filter 82 performs at least one of the first signal processing and the second signal processing on the second disturbance torque T_{ob2} calculated by the second disturbance estimator 65. The first signal processing is processing of extracting the frequency component that is important for the steering feel from the second disturbance torque T_{ob2} and using it as the first adjustment amount F2 for the assist torque Tₐₛ. The second signal processing is processing of extracting the frequency component that is unnecessary for the steering feel from the second disturbance torque T_{ob2} and using it as the second adjustment amount F5 for the assist torque Tₐₛ.

The target pinion angle calculation unit 70 receives the steering angle θₛ of the steering wheel 5 calculated by the angle calculation unit 69, and calculates the target pinion angle θₚ* based on the received steering angle θₛ.

The angular axial force calculation unit 62A receives the target pinion angle θₚ* calculated by the target pinion angle calculation unit 70, and calculates the angular axial force F1 based on the received target pinion angle θₚ*.

The seventh calculator 83 receives the angular axial force F1 and the first adjustment amount F2 when the third filter 82 performs the first signal processing. The seventh calculator 83 calculates the final angular axial force F3 as the axial torque T_{af} by adding the first adjustment amount F2 to the angular axial force F1.

The tenth calculator 101 receives the assist torque Tₐₛ and the axial torque T_{af}. The tenth calculator 101 calculates the reaction torque command value Tₛ* by subtracting the axial torque T_{af} from the assist torque Tₐₛ. Thus, the reaction torque command value Tₛ* provided with the road information is obtained.

The seventh calculator 83 receives the assist torque Tₐₛ and the second adjustment amount F5 when the third filter 82 performs the second signal processing. The seventh calculator 83 calculates the final angular axial force F3 as the axial torque T_{af} by subtracting the second adjustment amount F5 from the assist torque Tₐₛ.

The tenth calculator 101 receives the assist torque Tₐₛ and the axial torque T_{af}. The tenth calculator 101 calculates the reaction torque command value Tₛ* by subtracting the axial torque T_{af} from the assist torque Tₐₛ. Thus, the reaction torque command value Tₛ* in which the unnecessary information is reduced, i.e., the viscous component and the frictional component of the steering system 2 are reduced, is obtained.

The seventh calculator 83 receives the assist torque Tₐₛ, the first adjustment amount F2, and the second adjustment amount F5 when the third filter 82 performs both the first signal processing and the second signal processing. The seventh calculator 83 calculates the final angular axial force F3 as the axial torque T_{af} by subtracting the second adjustment amount F5 from the value obtained by adding the first adjustment amount F2 to the assist torque Tₐₛ. The seventh calculator 83 calculates the final angular axial force F3 as the axial torque T_{af} by adding the first adjustment amount F2 to the value obtained by subtracting the second adjustment amount F5 from the assist torque Tₐₛ.

The tenth calculator 101 receives the assist torque Tₐₛ and the axial torque T_{af}. The tenth calculator 101 calculates the reaction torque command value Tₛ* by subtracting the axial torque T_{af} from the assist torque Tₐₛ. Thus, the reaction torque command value Tₛ* in which the road information is provided and the viscous component and the frictional component of the steering system 2 are reduced is obtained.

According to the present embodiment, the same effects as the effects (6-1) to (6-3) of the tenth embodiment can be obtained. Depending on the product usage, the angular axial force calculation unit 62A may be replaced with the current axial force calculation unit 62C. With this configuration, the same effect as the effect (6-4) of the tenth embodiment can be obtained.

### <Twelfth Embodiment>

Next, a twelfth embodiment of the steering control device will be described. The present embodiment differs from the ninth embodiment shown in FIG. 12 in terms of the method for calculating the input torque Tin. Therefore, the same members and configurations as those in the ninth embodiment will be denoted by the same signs as those in the ninth embodiment, and detailed description thereof will be omitted.

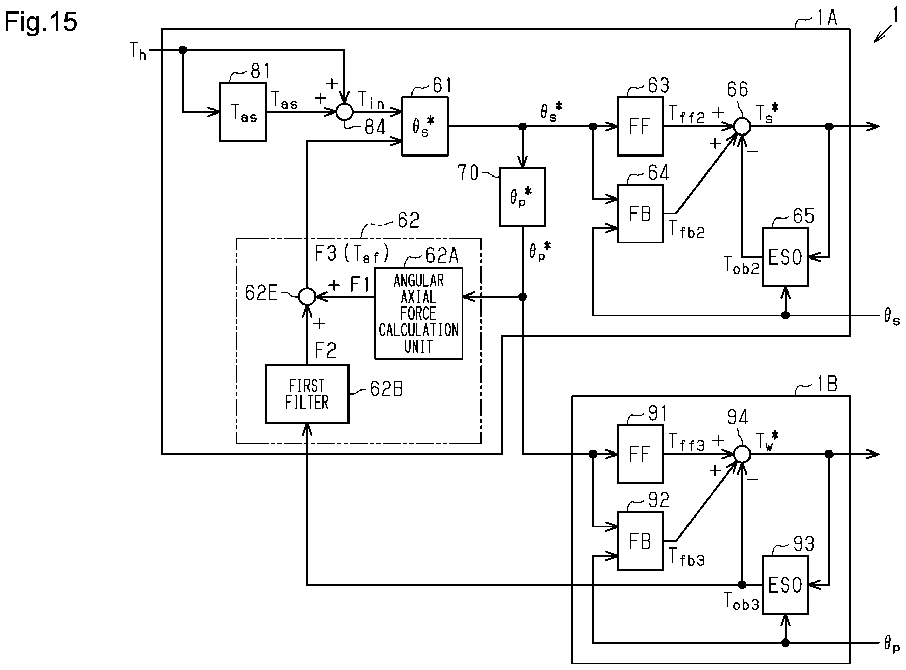

As shown in FIG. 15, the reaction force control unit 1A includes the assist torque calculation unit 81 and the eighth calculator 84. The reaction force control unit 1A further includes the target angle calculation unit 61, the axial torque calculation unit 62, the angle feedforward control unit 63, the angle feedback control unit 64, the second disturbance estimator 65, and the third calculator 66. The reaction force control unit 1A further includes the target pinion angle calculation unit 70.

The assist torque calculation unit 81 is the same as in the sixth embodiment shown in FIG. 8. The assist torque calculation unit 81 calculates the assist torque Tₐₛ based on the steering torque Tₕ. The eighth calculator 84 receives the assist torque Tₐₛ calculated by the assist torque calculation unit 81 and the steering torque Tₕ detected by the torque sensor 42. The eighth calculator 84 calculates the input torque Tᵢₙ by adding the assist torque Tₐₛ and the steering torque Tₕ.

The axial torque calculation unit 62 includes the angular axial force calculation unit 62A, the first filter 62B, and the fourth calculator 62E. The angular axial force calculation unit 62A calculates the angular axial force F1 based on the target pinion angle θₚ*. The first filter 62B extracts the frequency component that is important for the steering feel from the second disturbance torque T_{ob2} calculated by the second disturbance estimator 65, and uses it as the first adjustment amount F2 for the angular axial force F1. The fourth calculator 62E calculates the final angular axial force F3 as the axial torque T_{af} by adding the first adjustment amount F2 to the angular axial force F1.

The target angle calculation unit 61 receives the input torque Tᵢₙ calculated by the eighth calculator 84 and the axial torque T_{af} calculated by the axial torque calculation unit 62. The target angle calculation unit 61 calculates the target steering angle θₛ* based on the input torque Tᵢₙ and the axial torque T_{af}.

According to the present embodiment, the same effect as the effect (5-1) of the ninth embodiment can be obtained. Depending on the product usage, the axial torque calculation unit 62 may have the same configuration as in the third embodiment shown in FIG. 5. In this case, the axial torque calculation unit 62 includes the current axial force calculation unit 62C, the second filter 62D, and the fifth calculator 62F. With this configuration, the same effect as the effect (5-2) of the ninth embodiment can be obtained.

Depending on the product usage, the axial torque calculation unit 62 may have the same configuration as in the first embodiment shown in FIG. 3. In this case, the axial torque calculation unit 62 includes the angular axial force calculation unit 62A, the first filter 62B, the current axial force calculation unit 62C, the second filter 62D, the fourth calculator 62E, the fifth calculator 62F, and the mixed axial force calculation unit 62G. With this configuration, the same effect as the effect (5-3) of the ninth embodiment can be obtained.

### <Other Embodiments>

The embodiments may be modified as follows.
- The target angle calculation unit 61 and the target pinion angle calculation unit 70 may calculate a target steered angle instead of the target pinion angle θₚ*. The target steered angle is a target value of the steered angle θ_{w}. The target steered angle can be obtained, for example, by multiplying the target pinion angle θₚ* by a predetermined conversion factor.
   - The first disturbance estimator 54, the second disturbance estimator 65, and the third disturbance estimator 93 need not be the extended state observers. The first disturbance estimator 54, the second disturbance estimator 65, and the third disturbance estimator 93 may estimate disturbances based on other models such as an extended Kalman filter or an internal control model. For example, the extended Kalman filter can compensate for the viscosity and rigidity of the steering system 2.
   - The steering control device 1 may change the magnitude of the first adjustment amount F2 and the second adjustment amount F5 to be used for control, for example, by multiplying the first adjustment amount F2 and the second adjustment amount F5 by a gain. The value of the gain may vary depending on the vehicle speed V or the steering angular velocity. The first adjustment amount F2 is a frequency component extracted from the second disturbance torque T_{ob2}, and is a frequency component that is important for the steering feel. The second adjustment amount F5 is a frequency component extracted from the second disturbance torque T_{ob2}, and is a frequency component that is unnecessary for the steering feel. In this way, the steering feel given to the vehicle driver can be adjusted.
   - The values of the filter constants of the first filter 62B, the second filter 62D, and the third filter 82 may vary depending on the vehicle speed V or the steering angular velocity.
- When the vehicle has an autonomous driving function, the steering feel given to the vehicle driver may be adjusted between autonomous driving and manual driving. For example, in the first embodiment, during the autonomous driving, the first adjustment amount F2 and the second adjustment amount F5 are multiplied by "0" as a gain. Thus, the amount of the road information added to the angular axial force F1 becomes "0." Further, the amount of the unnecessary information subtracted from the current axial force F4 becomes "0." The autonomous driving function includes a driving assistance function. During driving assistance, the value of the gain for multiplication of the first adjustment amount F2 and the second adjustment amount F5 may be changed within a range of "0" or more and "1" or less. The value of the gain is changed, for example, based on the degree of system intervention in steering.

- The shape of the steering wheel 5 that is the operation element is not limited to a circular shape. The steering wheel 5 may have, for example, a D-shape or a U-shape.
- In the ninth to twelfth embodiments, the operation element is not limited to the steering wheel 5. The operation element may be, for example, a lever. The steering control device 1 controls the steering motor 31 such that the steered angle θ_{w} corresponding to the tilt angle of the lever is achieved. The steering control device 1 controls an actuator that applies a reaction force to the lever in response to an operation on the lever.
   - The ninth to twelfth embodiments may be applied to a rear-wheel steering system or a four-wheel steering system as well as a front-wheel steering system. The ninth to twelfth embodiments may be applied to a front-wheel independent steering system that independently controls right and left front wheels, or a four-wheel independent steering system that independently controls four wheels.
   - In the present specification, the phrase "at least one of A and B" means "A alone, B alone, or both A and B."

### <Appendices>

The steering control device 1 described in each embodiment can be understood, for example, as follows.
1. A steering control device (1) according to a first aspect controls a steering system (2) including a motor (31, 12) that generates a torque to be applied to an operation element (5) of a vehicle, and is configured to control the motor based on a torque command value (Tₐₛ*, Tₛ*) calculated according to an operation state of the operation element. The steering control device includes a disturbance estimator (65), a first processing unit (62B, 62D, 82), and a second processing unit (62E, 62F, 71, 83). The disturbance estimator is configured to calculate, using a model that simulates the steering system, a disturbance torque (T_{ob2}) that is a torque other than the torque generated by the motor (31) and affects a steered wheel (6) of the vehicle. The first processing unit is configured to generate an adjustment amount (F2, F5) for adjusting the torque command value based on the disturbance torque calculated by the disturbance estimator. The second processing unit is configured to reflect the adjustment amount generated by the first processing unit in a state variable (F1, F4, Tₕ*, Tₐₛ) that is a basis for calculation of the torque command value.

In this configuration, the torque command value is adjusted by reflecting the adjustment amount calculated based on the disturbance torque in the state variable that is the basis for the calculation of the torque command value. By controlling the motor based on the torque command value, an appropriate torque is applied to the operation element. That is, the vehicle driver can be given an appropriate steering feel via the operation element.

The steering wheel 5 corresponds to the operation element. The first filter 62B, the second filter 62D, and the third filter 83 each correspond to the first processing unit. The fourth calculator 62E, the fifth calculator 62F, the sixth calculator 71, and the seventh calculator 83 each correspond to the second processing unit. The steering motor 31 corresponds to the motor that affects the steered wheel.

The angular axial force F1, the current axial force F4, the target steering torque Tₕ*, and the assist torque Tₐₛ are each the state variable that is the basis for the calculation of the torque command value. The steering torque Tₕ is the state variable that reflects the operation state of the operation element. The assist torque command value Tₐₛ* and the reaction torque command value Tₛ* each correspond to the torque command value.

2. A steering control device according to a second aspect is based on the steering control device according to the first aspect. The operation element and the steered wheel are connected such that power is transmissible. The motor is a steering motor (31) that generates an assist force to be applied to a steered shaft (22) that steers the steered wheel.

In this configuration, the torque command value is adjusted by reflecting the adjustment amount calculated based on the disturbance torque in the state variable that is the basis for the calculation of the torque command value. By controlling the steering motor based on the torque command value, an appropriate torque is applied to the operation element. That is, the vehicle driver can be given an appropriate steering feel via the operation element.

3. A steering control device according to a third aspect is based on the steering control device according to the second aspect. The state variable is an axial force (F1, F4) that acts on the steered shaft and is calculated based on a steered state of the steered wheel.

The values of the target pinion angle θₚ* and the current I_{b} of the steering motor 31 are each the state variable that reflects the steered state of the steered wheel. In this configuration, the torque command value can be adjusted by reflecting the adjustment amount calculated based on the disturbance torque in the axial force calculated based on the steered state of the steered wheel.

4. A steering control device according to a fourth aspect is based on the steering control device according to the third aspect. The axial force includes at least one of an angular axial force (F1) calculated based on a target rotation angle (θₚ*) of a pinion shaft (21) that rotates in conjunction with the steered shaft and a current axial force (F4) calculated based on a value of a current (I_{b}) of the steering motor.

In this configuration, the torque command value can be adjusted by reflecting the adjustment amount calculated based on the disturbance torque in at least one of the angular axial force and the current axial force.
5. A steering control device according to a fifth aspect is based on the steering control device according to the fourth aspect. The first processing unit is configured to determine the adjustment amount by extracting a frequency component that is important for a steering feel from the disturbance torque when the state variable includes the angular axial force. The second processing unit is configured to add the adjustment amount to the angular axial force when the state variable includes the angular axial force.

In this configuration, the road information to be communicated to the vehicle driver is extracted from the disturbance torque, and the extracted road information is provided to the angular axial force. Thus, only the road information to be communicated to the vehicle driver can be superimposed on the angular axial force. By using this angular axial force, the torque command value provided with the road information can be obtained. The extraction of the frequency component that is important for the steering feel from the disturbance torque is extraction of the road information to be communicated to the vehicle driver from the disturbance torque. The addition of the adjustment amount to the angular axial force is provision of the road information extracted from the disturbance torque to the angular axial force.

6. A steering control device according to a sixth aspect is based on the steering control device according to the fourth aspect. The first processing unit is configured to determine the adjustment amount by extracting a frequency component that is unnecessary for a steering feel from the disturbance torque when the state variable includes the current axial force. The second processing unit is configured to subtract the adjustment amount from the current axial force when the state variable includes the current axial force.

In this configuration, the unnecessary information that need not be communicated to the vehicle driver is extracted from the disturbance torque, and the extracted unnecessary road information is removed from the current axial force. By using this current axial force, the torque command value in which the unnecessary information is reduced can be obtained. The extraction of the frequency component that is unnecessary for the steering feel from the disturbance torque is extraction of the unnecessary information that need not be communicated to the vehicle driver from the disturbance torque. The subtraction of the adjustment amount from the current axial force is removal of the unnecessary road information from the current axial force.

7. A steering control device according to a seventh aspect is based on the steering control device according to the second aspect. The state variable is a target steering torque of the operation element that is calculated based on an axial force acting on the steered shaft. The axial force is an angular axial force calculated based on a target rotation angle of a pinion shaft that rotates in conjunction with the steered shaft. The first processing unit is configured to determine the adjustment amount by extracting a frequency component that is important for a steering feel from the disturbance torque. The second processing unit is configured to add the adjustment amount to the target steering torque.

In this configuration, the road information to be communicated to the vehicle driver can be provided to the target steering torque.
8. A steering control device according to an eighth aspect is based on the steering control device according to the second aspect. The state variable is a target steering torque of the operation element that is calculated based on an axial force acting on the steered shaft. The axial force is a current axial force calculated based on a value of a current of the steering motor. The first processing unit is configured to determine the adjustment amount by extracting a frequency component that is unnecessary for a steering feel from the disturbance torque. The second processing unit is configured to subtract the adjustment amount from the target steering torque.

In this configuration, the unnecessary information that need not be communicated to the vehicle driver can be removed from the target steering torque.
9. A steering control device according to a ninth aspect is based on the steering control device according to the second aspect. The state variable is an assist torque that is a torque in the same direction as an operation direction of the operation element and is calculated based on the operation state of the operation element. The first processing unit is configured to perform at least one of first signal processing for determining the adjustment amount by extracting a frequency component that is important for a steering feel from the disturbance torque and second signal processing for determining the adjustment amount by extracting a frequency component that is unnecessary for the steering feel from the disturbance torque. The second processing unit is configured to add the adjustment amount to the assist torque when the first signal processing is performed, and to subtract the adjustment amount from the assist torque when the second signal processing is performed.

In this configuration, it is possible to obtain at least one of an assist torque provided with the road information to be communicated to the vehicle driver and an assist torque from which the unnecessary information that need not be communicated to the vehicle driver is removed. By calculating the torque command value using this assist torque, it is possible to obtain at least one of a torque command value provided with the road information to be communicated to the vehicle driver and a torque command value from which the unnecessary information that need not be communicated to the vehicle driver is removed.

10. A steering control device according to a tenth aspect is based on the steering control device according to the first aspect. The operation element (5) and the steered wheel (6) are mechanically separated such that power is not transmissible mechanically. The motor includes a reaction motor (12) that generates a steering reaction force to be applied to the operation element (5), and a steering motor (31) that generates a steering force to be applied to a steered shaft (22) that steers the steered wheel (6). The steering control device includes a reaction force control unit (1A) configured to control the reaction motor based on a reaction torque command value (Tₛ*) calculated according to the operation state of the operation element, and a steering operation control unit (1B) configured to control the steering motor based on a steering operation torque command value (T_{w}*) calculated according to the operation state of the operation element. The steering operation control unit includes the disturbance estimator (65), and the disturbance torque (T_{ob2}) calculated by the disturbance estimator is a torque that is other than a torque generated by the steering motor and affects the steered wheel. The reaction force control unit includes the first processing unit (62B, 62D, 82) and the second processing unit (62E, 62F, 71, 83). The first processing unit is configured to generate an adjustment amount (F2, F5) for adjusting the reaction torque command value based on the disturbance torque calculated by the disturbance estimator. The second processing unit is configured to reflect the adjustment amount generated by the first processing unit in a state variable that is a basis for calculation of the reaction torque command value.

In this configuration, the reaction torque command value is adjusted by reflecting the adjustment amount calculated based on the disturbance torque in the state variable that is the basis for the calculation of the reaction torque command value. By controlling the reaction motor based on the reaction torque command value, an appropriate reaction torque is applied to the operation element. That is, the vehicle driver can be given a more appropriate steering feel via the operation element.

11. A steering control device according to an eleventh aspect is based on the steering control device according to the tenth aspect. The state variable is an axial force that acts on the steered shaft and is calculated based on a steered state of the steered wheel.

In this configuration, the reaction torque command value can be adjusted by reflecting the adjustment amount calculated based on the disturbance torque in the axial force calculated based on the steered state of the steered wheel.

12. A steering control device according to a twelfth aspect is based on the steering control device according to the eleventh aspect. The axial force includes at least one of an angular axial force calculated based on a target rotation angle of a pinion shaft that rotates in conjunction with the steered shaft and a current axial force calculated based on a value of a current of the steering motor.

In this configuration, the reaction torque command value can be adjusted by reflecting the adjustment amount calculated based on the disturbance torque in at least one of the angular axial force and the current axial force.
13. A steering control device according to a thirteenth aspect is based on the steering control device according to the twelfth aspect. The first processing unit is configured to determine the adjustment amount by extracting a frequency component that is important for a steering feel from the disturbance torque when the state variable includes the angular axial force. The second processing unit is configured to add the adjustment amount to the angular axial force when the state variable includes the angular axial force.

In this configuration, the road information to be communicated to the vehicle driver is extracted from the disturbance torque, and the extracted road information is provided to the angular axial force. Thus, only the road information to be communicated to the vehicle driver can be superimposed on the angular axial force. By using this angular axial force, the reaction torque command value provided with the road information can be obtained.

14. A steering control device according to a fourteenth aspect is based on the steering control device according to the twelfth aspect. The first processing unit is configured to determine the adjustment amount by extracting a frequency component that is unnecessary for a steering feel from the disturbance torque when the state variable includes the current axial force. The second processing unit is configured to subtract the adjustment amount from the current axial force when the state variable includes the current axial force.

In this configuration, the unnecessary information that need not be communicated to the vehicle driver is extracted from the disturbance torque, and the extracted unnecessary road information is removed from the current axial force. By using this current axial force, the reaction torque command value in which the unnecessary information is reduced can be obtained.

15. A steering control device according to a fifteenth aspect is based on the steering control device according to the tenth aspect. The reaction torque command value is calculated by subtracting an axial force acting on the steered shaft from an assist torque. The assist torque is a torque in the same direction as an operation direction of the operation element, and is calculated based on the operation state of the operation element. The axial force is calculated based on a steered state of the steered wheel. The first processing unit is configured to perform at least one of first signal processing for determining the adjustment amount by extracting a frequency component that is important for a steering feel from the disturbance torque and second signal processing for determining the adjustment amount by extracting a frequency component that is unnecessary for the steering feel from the disturbance torque. The second processing unit is configured to add the adjustment amount to the assist torque when the first signal processing is performed, and to subtract the adjustment amount from the assist torque when the second signal processing is performed.

In this configuration, it is possible to obtain at least one of an assist torque provided with the road information to be communicated to the vehicle driver and an assist torque from which the unnecessary information that need not be communicated to the vehicle driver is removed. By calculating the reaction torque command value using this assist torque, it is possible to obtain at least one of a reaction torque command value provided with the road information to be communicated to the vehicle driver and a reaction torque command value from which the unnecessary information that need not be communicated to the vehicle driver is removed.

16. A steering control device according to a sixteenth aspect is based on the steering control device according to the tenth aspect. The reaction torque command value is calculated by subtracting an axial force acting on the steered shaft from an assist torque. The assist torque is a torque in the same direction as an operation direction of the operation element, and is calculated based on the operation state of the operation element. The axial force is calculated based on a steered state of the steered wheel. The first processing unit is configured to perform at least one of first signal processing for determining the adjustment amount by extracting a frequency component that is important for a steering feel from the disturbance torque and second signal processing for determining the adjustment amount by extracting a frequency component that is unnecessary for the steering feel from the disturbance torque. The second processing unit is configured to add the adjustment amount to the axial force when the first signal processing is performed, and to subtract the adjustment amount from the axial force when the second signal processing is performed.

In this configuration, it is possible to obtain at least one of an axial force provided with the road information to be communicated to the vehicle driver and an axial force from which the unnecessary information that need not be communicated to the vehicle driver is removed. By calculating the reaction torque command value using this axial force, it is possible to obtain at least one of a reaction torque command value provided with the road information to be communicated to the vehicle driver and a reaction torque command value from which the unnecessary information that need not be communicated to the vehicle driver is removed.

## Claims

1. A steering control device that controls a steering system including a motor that generates a torque to be applied to an operation element of a vehicle, and is configured to control the motor based on a torque command value calculated according to an operation state of the operation element, the steering control device comprising:
a disturbance estimator configured to calculate, using a model that simulates the steering system, a disturbance torque that is a torque other than the torque generated by the motor and affects a steered wheel of the vehicle;
a first processing unit configured to generate an adjustment amount for adjusting the torque command value based on the disturbance torque calculated by the disturbance estimator; and
a second processing unit configured to reflect the adjustment amount generated by the first processing unit in a state variable that is a basis for calculation of the torque command value.

2. The steering control device according to claim 1, wherein:
the operation element and the steered wheel are connected such that power is transmissible; and
the motor is a steering motor that generates an assist force to be applied to a steered shaft that steers the steered wheel.

3. The steering control device according to claim 2, wherein the state variable is an axial force that acts on the steered shaft and is calculated based on a steered state of the steered wheel.

4. The steering control device according to claim 3, wherein the axial force includes at least one of an angular axial force calculated based on a target rotation angle of a pinion shaft that rotates in conjunction with the steered shaft and a current axial force calculated based on a value of a current of the steering motor.

5. The steering system according to claim 4, wherein:
the first processing unit is configured to determine the adjustment amount by extracting a frequency component that is important for a steering feel from the disturbance torque when the state variable includes the angular axial force; and
the second processing unit is configured to add the adjustment amount to the angular axial force when the state variable includes the angular axial force.

6. The steering system according to claim 4, wherein:
the first processing unit is configured to determine the adjustment amount by extracting a frequency component that is unnecessary for a steering feel from the disturbance torque when the state variable includes the current axial force; and
the second processing unit is configured to subtract the adjustment amount from the current axial force when the state variable includes the current axial force.

7. The steering control device according to claim 2, wherein:
the state variable is a target steering torque of the operation element that is calculated based on an axial force acting on the steered shaft;
the axial force is an angular axial force calculated based on a target rotation angle of a pinion shaft that rotates in conjunction with the steered shaft;
the first processing unit is configured to determine the adjustment amount by extracting a frequency component that is important for a steering feel from the disturbance torque; and
the second processing unit is configured to add the adjustment amount to the target steering torque.

8. The steering control device according to claim 2, wherein:
the state variable is a target steering torque of the operation element that is calculated based on an axial force acting on the steered shaft;
the axial force is a current axial force calculated based on a value of a current of the steering motor;
the first processing unit is configured to determine the adjustment amount by extracting a frequency component that is unnecessary for a steering feel from the disturbance torque; and
the second processing unit is configured to subtract the adjustment amount from the target steering torque.

9. The steering control device according to claim 2, wherein:
the state variable is an assist torque that is a torque in the same direction as an operation direction of the operation element and is calculated based on the operation state of the operation element;
the first processing unit is configured to perform at least one of first signal processing for determining the adjustment amount by extracting a frequency component that is important for a steering feel from the disturbance torque and second signal processing for determining the adjustment amount by extracting a frequency component that is unnecessary for the steering feel from the disturbance torque; and
the second processing unit is configured to add the adjustment amount to the assist torque when the first signal processing is performed, and to subtract the adjustment amount from the assist torque when the second signal processing is performed.

10. The steering control device according to claim 1, wherein:
the operation element and the steered wheel are mechanically separated such that power is not transmissible mechanically;
the motor includes a reaction motor that generates a steering reaction force to be applied to the operation element, and a steering motor that generates a steering force to be applied to a steered shaft that steers the steered wheel;
the steering control device includes
a reaction force control unit configured to control the reaction motor based on a reaction torque command value calculated according to the operation state of the operation element, and
a steering operation control unit configured to control the steering motor based on a steering operation torque command value calculated according to the operation state of the operation element;
the steering operation control unit includes the disturbance estimator, and the disturbance torque calculated by the disturbance estimator is a torque that is other than a torque generated by the steering motor and affects the steered wheel;
the reaction force control unit includes the first processing unit and the second processing unit;
the first processing unit is configured to generate an adjustment amount for adjusting the reaction torque command value based on the disturbance torque calculated by the disturbance estimator; and
the second processing unit is configured to reflect the adjustment amount generated by the first processing unit in a state variable that is a basis for calculation of the reaction torque command value.

11. The steering control device according to claim 10, wherein the state variable is an axial force that acts on the steered shaft and is calculated based on a steered state of the steered wheel.

12. The steering control device according to claim 11, wherein the axial force includes at least one of an angular axial force calculated based on a target rotation angle of a pinion shaft that rotates in conjunction with the steered shaft and a current axial force calculated based on a value of a current of the steering motor.

13. The steering system according to claim 12, wherein:
the first processing unit is configured to determine the adjustment amount by extracting a frequency component that is important for a steering feel from the disturbance torque when the state variable includes the angular axial force; and
the second processing unit is configured to add the adjustment amount to the angular axial force when the state variable includes the angular axial force.

14. The steering system according to claim 12, wherein:
the first processing unit is configured to determine the adjustment amount by extracting a frequency component that is unnecessary for a steering feel from the disturbance torque when the state variable includes the current axial force; and
the second processing unit is configured to subtract the adjustment amount from the current axial force when the state variable includes the current axial force.

15. The steering control device according to claim 10, wherein:
the reaction torque command value is calculated by subtracting an axial force acting on the steered shaft from an assist torque;
the assist torque is a torque in the same direction as an operation direction of the operation element, and is calculated based on the operation state of the operation element;
the axial force is calculated based on a steered state of the steered wheel;
the first processing unit is configured to perform at least one of first signal processing for determining the adjustment amount by extracting a frequency component that is important for a steering feel from the disturbance torque and second signal processing for determining the adjustment amount by extracting a frequency component that is unnecessary for the steering feel from the disturbance torque; and
the second processing unit is configured to add the adjustment amount to the assist torque when the first signal processing is performed, and to subtract the adjustment amount from the assist torque when the second signal processing is performed.

16. The steering control device according to claim 10, wherein:
the reaction torque command value is calculated by subtracting an axial force acting on the steered shaft from an assist torque;
the assist torque is a torque in the same direction as an operation direction of the operation element, and is calculated based on the operation state of the operation element;
the axial force is calculated based on a steered state of the steered wheel;
the first processing unit is configured to perform at least one of first signal processing for determining the adjustment amount by extracting a frequency component that is important for a steering feel from the disturbance torque and second signal processing for determining the adjustment amount by extracting a frequency component that is unnecessary for the steering feel from the disturbance torque; and
the second processing unit is configured to add the adjustment amount to the axial force when the first signal processing is performed, and to subtract the adjustment amount from the axial force when the second signal processing is performed.
